# EUROPEAN PATENT APPLICATION

(11) **EP 4 546 691 A1**
(43) Date of publication of application: **30.04.2025**
(21) Application number: 23838842.5
(22) Date of filing: 06.07.2023
(51) Int. Cl.: H04L 5/00

(54) **SIGNAL TRANSMISSION METHOD AND COMMUNICATION APPARATUS**

(30) Priority: 13.07.2022 CN 202210828877; 19.07.2022 CN 202210871948
(71) Applicant: Huawei Technologies Co., Ltd., Shenzhen, Guangdong 518129 (CN)
(72) Inventor: XUE, Yifan, Shenzhen, Guangdong 518129 (CN); XUE, Lixia, Shenzhen, Guangdong 518129 (CN); LI, Qiang, Shenzhen, Guangdong 518129 (CN)
(74) Representative: Thun, Clemens
(86) International application number: PCT/CN2023/106135
(87) International publication number: WO 2024/012350

(57) **Abstract**

A signal transmission method and a communication apparatus are provided. The method includes: A network device sends at least two synchronization signals, where a time interval between every two adjacent synchronization signals in the at least two synchronization signals is less than or equal to a first value, and the at least two synchronization signals include a first synchronization signal, and the network device sends a wake-up signal after sending the first synchronization signal, where the wake-up signal is used to wake up at least one terminal device, a time interval between the first synchronization signal and the wake-up signal is less than or equal to a second value, and the first value is greater than the second value. A time interval between the synchronization signal and the wake-up signal is less than or equal to the second value, and a time interval between adjacent synchronization signals is less than or equal to the first value, so that overheads of the synchronization signal can be reduced when a demodulation requirement is met. The method provided in embodiments may be applied to a communication system, for example, 5G or NR, LTE, V2X, D2D, M2M, MTC, the internet of things, a future communication system, or the like.

## Description

This application claims priority to Chinese Patent Application No. 202210828877.4, filed with the China National Intellectual Property Administration on July 13, 2022 and entitled "METHOD FOR SENDING SYNCHRONIZATION SIGNAL ON WUR LINK", and to Chinese Patent Application No. 202210871948.9, filed with the China National Intellectual Property Administration on July 19, 2022 and entitled " SIGNAL TRANSMISSION METHOD AND COMMUNICATION APPARATUS", both of which are incorporated herein by reference in their entireties.

### TECHNICAL FIELD

This application relates to the communication field, and more specifically, to a signal transmission method and a communication apparatus.

### BACKGROUND

A terminal device may receive a wake-up signal through a separate low-power small circuit, for example, a wake-up radio (wake-up radio, WUR), and a main receiver may be in a sleep state. After the terminal device detects the wake-up signal through the WUR, the terminal device triggers wake-up of the main receiver. After the main receiver wakes up, the terminal device may perform a paging (paging) receiving procedure through the main receiver, for example, receive a paging message. Therefore, it is particularly important to correctly receive the wake-up signal.

In actual communication, because local clock precision of the terminal device is limited, time drift may occur. If the WUR does not provide a synchronization function, after the terminal device works through the WUR for a period of time, a problem of time asynchronization between the terminal device and a network device may occur (for example, symbol boundary locations considered by the terminal device and the network device are inconsistent). Consequently, demodulation of the wake-up signal is affected. In a possible solution, time synchronization is performed by using a synchronization signal. In this case, how to reduce overheads of the synchronization signal when a demodulation requirement of the wake-up signal is met is a problem that needs to be concerned.

### SUMMARY

This application provides a signal transmission method and a communication apparatus, to reduce, by designing a manner of sending a synchronization signal, overheads of the synchronization signal when a demodulation requirement of a wake-up signal is met.

According to a first aspect, a signal transmission method is provided. The method may be performed by a network device, or may be performed by a component (for example, a chip or a circuit) of a network device. This is not limited. For ease of descriptions, an example in which the method is performed by a network device is used below for descriptions.

The method may include: A network device sends at least two synchronization signals, where a time interval between every two adjacent synchronization signals in the at least two synchronization signals is less than or equal to a first value, and the network device sends a wake-up signal after sending a first synchronization signal, where the wake-up signal is used to wake up at least one terminal device, a time interval between the first synchronization signal and the wake-up signal is less than or equal to a second value, the at least two synchronization signals include the first synchronization signal, and the first value is greater than the second value.

Optionally, the synchronization signal is used for at least one of the following: link measurement by the terminal device and assistance in the terminal device in demodulating the wake-up signal.

Based on the foregoing technical solution, the time interval between the synchronization signal and the wake-up signal that are sent by the network device is less than or equal to the second value. This helps the terminal device perform timing and synchronization based on the synchronization signal with the time interval from the wake-up signal that is less than or equal to the second value, to improve demodulation performance of the terminal device in demodulating the wake-up signal. In addition, the time interval between adjacent synchronization signals is less than or equal to the first value. In other words, the network device sends the synchronization signal at least once at the time interval within the first value range, so that the terminal device can receive the synchronization signal at intervals of a period of time (for example, the time interval within the first value range), and may perform link measurement based on the synchronization signal, and does not need to frequently send the synchronization signal, that is, provided that the synchronization signal is received at the time interval within the first value range. Therefore, in this application, the time interval between the first synchronization signal and the wake-up signal is less than or equal to the second value, and the time interval between the adjacent synchronization signals is less than or equal to the first value, so that overheads of the synchronization signal can be reduced when a demodulation requirement is met. In other words, the time interval between the adjacent synchronization signals is less than or equal to the first value, and the synchronization signals used for link measurement do not need to be frequently sent.

Further, the terminal device performs link measurement at intervals of a period of time (for example, the time interval within the first value range), so that the terminal device can determine whether quality of a wake-up link is good enough. For example, if the quality of the wake-up link measured by the terminal device is poor, the terminal device may switch to a main link in a timely manner, so that the terminal device can continue to monitor the wake-up signal through the main link, to avoid a case in which the wake-up signal cannot be received because the quality of the wake-up link is poor. If the quality of the wake-up link measured by the terminal device is good, the terminal device may continue to receive the wake-up signal on the wake-up link.

With reference to the first aspect, in some implementations of the first aspect, that a network device sends at least two synchronization signals includes: The network device sends the at least two synchronization signals on some or all of N candidate occasions, where N is an integer greater than 1.

The candidate occasions may represent a series of time locations. Optionally, the candidate occasions are a series of time locations that periodically appear. The candidate occasions may be a part of all time locations.

Optionally, the candidate occasions are configured by the network device, or are predefined.

Based on the foregoing technical solution, the network device may send the synchronization signal on the candidate occasion, and correspondingly, the terminal device may monitor the synchronization signal on the candidate occasion. In this way, the terminal device only needs to monitor the synchronization signal on the candidate occasion, and does not need to monitor the synchronization signal at any time location, to reduce power consumption caused by monitoring the synchronization signal.

With reference to the first aspect, in some implementations of the first aspect, all or some of the at least two synchronization signals are periodically sent, and a periodicity T is less than or equal to the first value.

The periodicity T is a periodicity of a synchronization signal periodically sent in the at least two synchronization signals.

Based on the foregoing technical solution, the network device may periodically send the synchronization signal, and the periodicity of the synchronization signal is less than or equal to the first value. In this way, it can be ensured that the terminal device can receive the periodic synchronization signal at the time interval within the first value range, so that the terminal device can perform link measurement.

With reference to the first aspect, in some implementations of the first aspect, the time interval between every two adjacent synchronization signals in the at least two synchronization signals is greater than or equal to the second value.

Based on the foregoing technical solution, the time interval between adjacent synchronization signals is less than or equal to a first value, and the time interval between adjacent synchronization signals is greater than or equal to a second value. Based on this, because the time interval between the first synchronization signal and the wake-up signal is less than or equal to the second value, when it is ensured that the time interval between the synchronization signal and the wake-up signal is less than or equal to the second value, the network device may no longer send the synchronization signal within duration of the second value after sending the synchronization signal. In this way, resource overheads of the synchronization signal can be reduced.

With reference to the first aspect, in some implementations of the first aspect, that the network device sends a wake-up signal after sending the first synchronization signal includes: The network device sends the wake-up signal and skips sending the synchronization signal in a first time period after sending the first synchronization signal, where a time length of the first time period is less than or equal to the second value.

Based on the foregoing technical solution, the network device sends the wake-up signal and skips sending the synchronization signal in the first time period after sending the first synchronization signal, where the time length of the first time period is less than or equal to the second value. Based on this, when it is ensured that the time interval between the synchronization signal and the wake-up signal is less than or equal to the second value, the network device may no longer send the synchronization signal within the duration of the second value after sending the synchronization signal. In this way, resource overheads of the synchronization signal can be reduced. Correspondingly, power consumption caused by monitoring the synchronization signal by the terminal device may also be reduced.

With reference to the first aspect, in some implementations of the first aspect, the time interval between every two adjacent synchronization signals in the at least two synchronization signals is greater than the time interval between the first synchronization signal and the wake-up signal.

Based on the foregoing technical solution, if a demodulation requirement is met, the time interval between every two adjacent synchronization signals in the at least two synchronization signals may be greater than the time interval between the first synchronization signal and the wake-up signal, to further reduce overheads of the synchronization signal.

With reference to the first aspect, in some implementations of the first aspect, that a network device sends at least two synchronization signals includes: The network device sends a first-type synchronization signal in the at least two synchronization signals on a first frequency resource, and the network device sends a second-type synchronization signal in the at least two synchronization signals on a second frequency resource.

Optionally, the first-type synchronization signal and the second-type synchronization signal are sent in different manners.

Based on the foregoing technical solution, synchronization signals on different frequency resources may be sent in different manners.

With reference to the first aspect, in some implementations of the first aspect, the first-type synchronization signal is a periodically sent synchronization signal, and the second-type synchronization signal meets any one of the following: the wake-up signal includes the second-type synchronization signal, or the second-type synchronization signal is a periodically sent synchronization signal.

Based on the foregoing technical solution, the synchronization signal on the first frequency resource may be fixedly configured, that is, periodically sent, and the synchronization signal on the second frequency resource may be flexibly configured. For example, it may be determined, based on an actual communication status, whether the synchronization signal is periodically sent or sent along with a wake-up signal (that is, sending along with a wake-up signal indicates that a wake-up signal includes a synchronization signal, in other words, an associated synchronization signal is sent each time a wake-up signal is sent). Because the synchronization signal on the first frequency resource is periodically sent, the terminal device may perform synchronization and/or link measurement or the like by using the synchronization signal periodically sent on the first frequency resource.

According to a second aspect, a signal transmission method is provided. The method may be performed by a terminal device, or may be performed by a component (for example, a chip or a circuit) of a terminal device. This is not limited. For ease of descriptions, an example in which the method is performed by a terminal device is used below for descriptions.

The method may include: A terminal device receives at least two synchronization signals from a network device, where a time interval between every two adjacent synchronization signals in the at least two synchronization signals is less than or equal to a first value, and the at least two synchronization signals include a first synchronization signal; and the terminal device monitors a wake-up signal after receiving the first synchronization signal, where the wake-up signal is used to wake up at least one terminal device, a time interval between the first synchronization signal and the wake-up signal is less than or equal to a second value, and the first value is greater than the second value.

With reference to the second aspect, in some implementations of the second aspect, that a terminal device receives at least two synchronization signals from a network device includes: The terminal device receives, from the network device, the at least two synchronization signals on some or all of N candidate occasions, where N is an integer greater than 1.

With reference to the second aspect, in some implementations of the second aspect, all or some of the at least two synchronization signals are periodically sent, and a periodicity T is less than or equal to the first value.

With reference to the second aspect, in some implementations of the second aspect, the time interval between every two adjacent synchronization signals in the at least two synchronization signals is greater than or equal to the second value.

With reference to the second aspect, in some implementations of the second aspect, that the terminal device monitors a wake-up signal after receiving the first synchronization signal from a network device includes: The terminal device monitors the wake-up signal and skips monitoring a synchronization signal in a first time period after receiving the first synchronization signal, where a time length of the first time period is less than or equal to the second value.

With reference to the second aspect, in some implementations of the second aspect, the method further includes: The terminal device monitors a second synchronization signal after the first time period, and skips monitoring the wake-up signal before the terminal device detects the second synchronization signal.

With reference to the second aspect, in some implementations of the second aspect, the time interval between every two adjacent synchronization signals in the at least two synchronization signals is greater than the time interval between the first synchronization signal and the wake-up signal.

With reference to the second aspect, in some implementations of the second aspect, that a terminal device receives at least two synchronization signals from a network device includes: The terminal device receives, from the network device, a first-type synchronization signal in the at least two synchronization signals on a first frequency resource, and receives, from the network device, a second-type synchronization signal in the at least two synchronization signals on a second frequency resource.

With reference to the second aspect, in some implementations of the second aspect, the first-type synchronization signal is a periodically sent synchronization signal, and the second-type synchronization signal meets any one of the following: the wake-up signal includes the second-type synchronization signal, or the second-type synchronization signal is a periodically sent synchronization signal.

With reference to the second aspect, in some implementations of the second aspect, the wake-up signal includes the second-type synchronization signal, and the method further includes: if the terminal device does not receive the second-type synchronization signal on the second frequency resource within preset duration, the terminal device receives the second-type synchronization signal on the first frequency resource, or the terminal device performs, within a preset measurement gap, measurement by using the first-type synchronization signal received on the first frequency resource.

For beneficial effects of the second aspect and the possible designs, refer to the related descriptions of the first aspect. Details are not described herein again.

According to a third aspect, a signal transmission method is provided. The method may be performed by a network device, or may be performed by a component (for example, a chip or a circuit) of a network device. This is not limited. For ease of descriptions, an example in which the method is performed by a network device is used below for descriptions.

The method may include: A network device sends at least two synchronization signals on some or all of N candidate occasions, where N is an integer greater than 1.

In an example, for the at least two synchronization signals, refer to the design in the first aspect.

The candidate occasions may represent a series of time locations. Optionally, the candidate occasions are a series of time locations that periodically appear. The candidate occasions may be a part of all time locations.

Optionally, the candidate occasions are configured by the network device, or are predefined.

Based on the foregoing technical solution, the network device may send the synchronization signal on the candidate occasion, and correspondingly, the terminal device may monitor the synchronization signal on the candidate occasion. In this way, the terminal device only needs to monitor the synchronization signal on the candidate occasion, and does not need to monitor the synchronization signal at any time location, to reduce power consumption caused by monitoring the synchronization signal.

With reference to the third aspect, in some implementations of the third aspect, all or some of the at least two synchronization signals are periodically sent.

With reference to the third aspect, in some implementations of the third aspect, the method further includes: The network device sends a wake-up signal and skips sending a synchronization signal in a first time period after sending a first synchronization signal, where the wake-up signal is used to wake up at least one terminal device, and the at least two synchronization signals include the first synchronization signal.

According to a fourth aspect, a signal transmission method is provided. The method may be performed by a terminal device, or may be performed by a component (for example, a chip or a circuit) of a terminal device. This is not limited. For ease of descriptions, an example in which the method is performed by a terminal device is used below for descriptions.

The method may include: A terminal device receives, from a network device, at least two synchronization signals on some or all of N candidate occasions, where N is an integer greater than 1.

With reference to the fourth aspect, in some implementations of the fourth aspect, all or some of the at least two synchronization signals are periodically sent.

With reference to the fourth aspect, in some implementations of the fourth aspect, the method further includes: The terminal device monitors a wake-up signal and skips monitoring a synchronization signal in a first time period after receiving a first synchronization signal, where the wake-up signal is used to wake up at least one terminal device, and the at least two synchronization signals include the first synchronization signal.

With reference to the fourth aspect, in some implementations of the fourth aspect, the method further includes: The terminal device monitors a second synchronization signal after the first time period, and skips monitoring the wake-up signal before the terminal device detects the second synchronization signal.

For beneficial effects of the fourth aspect and the possible designs, refer to the related descriptions of the third aspect. Details are not described herein again.

With reference to the first aspect to the fourth aspect, in some implementations, a format of the synchronization signal is different from a format of the wake-up signal.

With reference to the first aspect to the fourth aspect, in some implementations, a waveform of the synchronization signal is the same as a waveform of the wake-up signal, and/or a modulation scheme of the synchronization signal is the same as a modulation scheme of the wake-up signal.

With reference to the first aspect to the fourth aspect, in some implementations, a modulation scheme of the synchronization signal and a modulation scheme of the wake-up signal are on-off keying OOK, and/or a waveform of the synchronization signal and/or a waveform of the wake-up signal are/is OOK.

With reference to the first aspect to the fourth aspect, in some implementations, the terminal device receives the synchronization signal and the wake-up signal on a wake-up link.

According to a fifth aspect, a signal transmission method is provided. The method may be performed by a terminal device, or may be performed by a component (for example, a chip or a circuit) of a terminal device. This is not limited. For ease of descriptions, an example in which the method is performed by a terminal device is used below for descriptions.

The method may include: A terminal device receives at least two wake-up signals from a network device, where the at least two wake-up signals include a first wake-up signal and a second wake-up signal, the first wake-up signal includes a first synchronization signal and an identifier of at least one terminal device, the first wake-up signal is used to wake up the at least one terminal device, the second wake-up signal includes a second synchronization signal and indication information, and the indication information represents that the second wake-up signal does not wake up any terminal device.

Optionally, the first synchronization signal is used to assist the terminal device in demodulating the first wake-up signal.

Optionally, the second synchronization signal is used by the terminal device to perform link measurement.

Based on the foregoing technical solution, the synchronization signal and the identifier of the terminal device may be sent along with the wake-up signal. Considering that if no terminal device is woken up within a period of time, to facilitate link measurement by the terminal device, the network device may also send a wake-up signal. If the wake-up signal carries wake-up information and a synchronization signal, the wake-up information in the wake-up signal may cause a false wake-up of some terminal devices. Based on the foregoing technical solution, if the wake-up signal is not used to wake up the terminal device, the wake-up signal carries the synchronization signal and the indication information. In other words, if the wake-up signal includes the synchronization signal and the identifier of the at least one terminal device, the wake-up signal is used to wake up the at least one terminal device; or if the wake-up signal includes the synchronization signal and the indication information, the wake-up signal does not wake up any terminal device.

With reference to the fifth aspect, in some implementations of the fifth aspect, a time interval between every two adjacent wake-up signals in the at least two wake-up signals is less than or equal to a first value.

With reference to the fifth aspect, in some implementations of the fifth aspect, the indication information is a preset value.

Based on the foregoing technical solution, the two wake-up signals (that is, the first wake-up signal and the second wake-up signal) may be distinguished by using whether the identifier in the wake-up signal is the preset value or the identifier of the terminal device.

According to a sixth aspect, a signal transmission method is provided. The method may be performed by a network device, or may be performed by a component (for example, a chip or a circuit) of a network device. This is not limited. For ease of descriptions, an example in which the method is performed by a network device is used below for descriptions.

The method may include: A network device sends at least two wake-up signals, where the at least two wake-up signals include a first wake-up signal and a second wake-up signal, the first wake-up signal includes a first synchronization signal and an identifier of at least one terminal device, the first wake-up signal is used to wake up the at least one terminal device, the second wake-up signal includes a second synchronization signal and indication information, and the indication information represents that the second wake-up signal does not wake up any terminal device.

With reference to the sixth aspect, in some implementations of the sixth aspect, a time interval between every two adjacent wake-up signals in the at least two wake-up signals is less than or equal to a first value.

With reference to the sixth aspect, in some implementations of the sixth aspect, the indication information is a preset value.

For beneficial effects of the sixth aspect and the possible designs, refer to the related descriptions of the fifth aspect. Details are not described herein again.

According to a seventh aspect, a signal transmission method is provided. The method may be performed by a network device, or may be performed by a component (for example, a chip or a circuit) of a network device. This is not limited. For ease of descriptions, an example in which the method is performed by a network device is used below for descriptions.

The method may include: A network device sends a first-type synchronization signal on a first frequency resource; and the network device sends a second-type synchronization signal on a second frequency resource, where the first-type synchronization signal is a periodically sent synchronization signal, and the second-type synchronization signal meets any one of the following: a wake-up signal includes the second-type synchronization signal, or the second-type synchronization signal is a periodically sent synchronization signal, and a wake-up signal is used to wake up at least one terminal device.

According to an eighth aspect, a signal transmission method is provided. The method may be performed by a terminal device, or may be performed by a component (for example, a chip or a circuit) of a terminal device. This is not limited. For ease of descriptions, an example in which the method is performed by a terminal device is used below for descriptions.

The method may include: A terminal device receives a first-type synchronization signal on a first frequency resource; and the terminal device receives a second-type synchronization signal on a second frequency resource, where the first-type synchronization signal is a periodically sent synchronization signal, and the second-type synchronization signal meets any one of the following: a wake-up signal includes the second-type synchronization signal, or the second-type synchronization signal is a periodically sent synchronization signal, and a wake-up signal is used to wake up at least one terminal device.

With reference to the eighth aspect, in some implementations of the eighth aspect, the wake-up signal includes the second-type synchronization signal, and the method further includes: if the terminal device does not receive the second-type synchronization signal on the second frequency resource within preset duration, the terminal device receives the second-type synchronization signal on the first frequency resource; or the terminal device performs, within a preset measurement gap, measurement by using the first-type synchronization signal received on the first frequency resource.

According to a ninth aspect, a communication apparatus is provided. The apparatus is configured to perform the method according to any one of the first aspect to the eighth aspect. Specifically, the apparatus may include a unit and/or module configured to perform the method according to any one of the foregoing implementations of any one of the first aspect to the eighth aspect, for example, a processing unit and/or a communication unit.

In an implementation, the apparatus is a communication device (for example, a terminal device or a network device). When the apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, a terminal device or a network device). When the apparatus is the chip, the chip system, or the circuit used in the communication device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a tenth aspect, a communication apparatus is provided. The apparatus includes: a memory, configured to store a program; and at least one processor, configured to execute a computer program or instructions stored in the memory, to perform the method according to any one of the foregoing implementations of any one of the first aspect to the eighth aspect.

In an implementation, the apparatus is a communication device (for example, a terminal device or a network device).

In another implementation, the apparatus is a chip, a chip system, or a circuit used in a communication device (for example, a terminal device or a network device).

According to an eleventh aspect, this application provides a processor, configured to perform the method according to any one of the foregoing aspects.

Operations such as sending and obtaining/receiving related to the processor may be understood as operations such as output and input of the processor, or operations such as sending and receiving performed by a radio frequency circuit and an antenna, unless otherwise specified, or provided that the operations do not contradict actual functions or internal logic of the operations in related descriptions. This is not limited in this application.

According to a twelfth aspect, a computer-readable storage medium is provided. The computer-readable medium stores program code to be executed by a device, and the program code includes the method according to any one of the foregoing implementations of any one of the first aspect to the eighth aspect.

According to a thirteenth aspect, a computer program product including instructions is provided. When the computer program product is run on a computer, the computer is enabled to perform the method according to any one of the foregoing implementations of any one of the first aspect to the eighth aspect.

According to a fourteenth aspect, a chip is provided. The chip includes a processor and a communication interface. The processor reads, through the communication interface, instructions stored in a memory, to perform the method according to any one of the foregoing implementations of any one of the first aspect to the eighth aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method according to any one of the foregoing implementations of any one of the first aspect to the eighth aspect.

According to a fifteenth aspect, a communication system is provided, including the foregoing terminal device and the foregoing network device.

### BRIEF DESCRIPTION OF DRAWINGS

FIG. 1 is a diagram of a wireless communication system 100 applicable to an embodiment of this application;
FIG. 2 is a diagram in which a terminal device receives a wake-up signal through a wake-up circuit;
FIG. 3 is a diagram of a waveform of a wake-up signal modulated by using OOK;
FIG. 4 is a diagram of a waveform after a signal passes through a channel;
FIG. 5 is a diagram of a synchronization signal sent along with a wake-up signal;
FIG. 6 is a diagram of periodically sending a synchronization signal;
FIG. 7 is a diagram of a signal transmission method 700 according to an embodiment of this application;
FIG. 8 is a diagram of sending a synchronization signal;
FIG. 9 is another diagram of sending a synchronization signal;
FIG. 10 is another diagram of sending a synchronization signal;
FIG. 11 is another diagram of sending a synchronization signal;
FIG. 12 is a diagram of a synchronization signal and a wake-up signal;
FIG. 13 is another diagram of sending a synchronization signal;
FIG. 14 is a diagram of a frequency resource occupied by a wake-up signal;
FIG. 15 is a diagram of a communication apparatus 1500 according to an embodiment of this application;
FIG. 16 is a diagram of another communication apparatus 1600 according to an embodiment of this application; and
FIG. 17 is a diagram of a chip system 1700 according to an embodiment of this application.

### DESCRIPTION OF EMBODIMENTS

The following describes technical solutions of embodiments in this application with reference to accompanying drawings.

The technical solutions provided in this application may be applied to various communication systems, for example, a fifth generation (5th generation, 5G) or new radio (new radio, NR) system, a long-term evolution (long-term evolution, LTE) system, an LTE frequency division duplex (frequency division duplex, FDD) system, an LTE time division duplex (time division duplex, TDD) system, or the like. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), an internet of things (internet of things, IoT) communication system, or another communication system.

A terminal device in embodiments of this application may alternatively be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides a user with voice/data. For example, the terminal device may be a hand-held device or an in-vehicle device with a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a hand-held device with a wireless communication function, a computing device or another processing device connected to a wireless modem, a wearable device, a terminal device in a 5G network, a terminal device in a future evolved public land mobile network (public land mobile network, PLMN), or the like. This is not limited in embodiments of this application.

By way of example but not limitation, in embodiments of this application, the terminal device may alternatively be a wearable device. The wearable device may alternatively be referred to as an intelligent wearable device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, intelligent wearable devices include full-featured and large-size devices that can implement complete or a part of functions without depending on smartphones, for example, smart watches or smart glasses, and devices that are dedicated to only one type of application function and need to work with other devices such as smartphones, for example, various smart bands or smart jewelry for monitoring physical signs.

In embodiments of this application, an apparatus configured to implement a function of a terminal device may be a terminal device, or may be an apparatus, for example, a chip system or a chip, that can support a terminal device in implementing the function. The apparatus may be installed in the terminal device. In embodiments of this application, the chip system may include a chip, or may include a chip and another discrete component.

A network device in embodiments of this application may be a device configured to communicate with the terminal device. The network device may alternatively be referred to as an access network device or a radio access network device. For example, the network device may be a base station. The network device in embodiments of this application may be a radio access network (radio access network, RAN) node (or device) that connects the terminal device to a wireless network. The base station may cover various names in the following in a broad sense, or may be replaced with the following names, for example, a NodeB (NodeB), an evolved NodeB (evolved NodeB, eNB), a next-generation NodeB (next-generation NodeB, gNB), a relay station, an access point, a transmission reception point (transmission reception point, TRP), a transmission point (transmission point, TP), a primary station, a secondary station, a multi-standard radio (motor slide retainer, MSR) node, a home base station, a network controller, an access node, a wireless node, an access point (AP), a transmission node, a transceiver node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, an analogue, or a combination thereof. The base station may alternatively be a communication module, a modem, or a chip that is disposed in the foregoing device or apparatus. The base station may alternatively be a mobile switching center, a device that bears a base station function in D2D, V2X, or M2M communication, a network side device in a 6G network, a device that bears a base station function in a future communication system, or the like. The base station may support networks of a same access technology or different access technologies. A specific technology and a specific device form used for the network device are not limited in embodiments of this application.

The base station may be fixed or mobile. For example, a helicopter or an uncrewed aerial vehicle may be configured as a mobile base station, and one or more cells may move based on a location of the mobile base station. In other examples, a helicopter or an uncrewed aerial vehicle may be configured as a device for communicating with another base station.

In some deployments, the network device mentioned in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node.

The network device and the terminal device may be deployed on the land, including an indoor device, an outdoor device, a hand-held device, or an in-vehicle device; may be deployed on the water; or may be deployed on an airplane, a balloon, and a satellite in the air. Scenarios in which the network device and the terminal device are located are not limited in embodiments of this application.

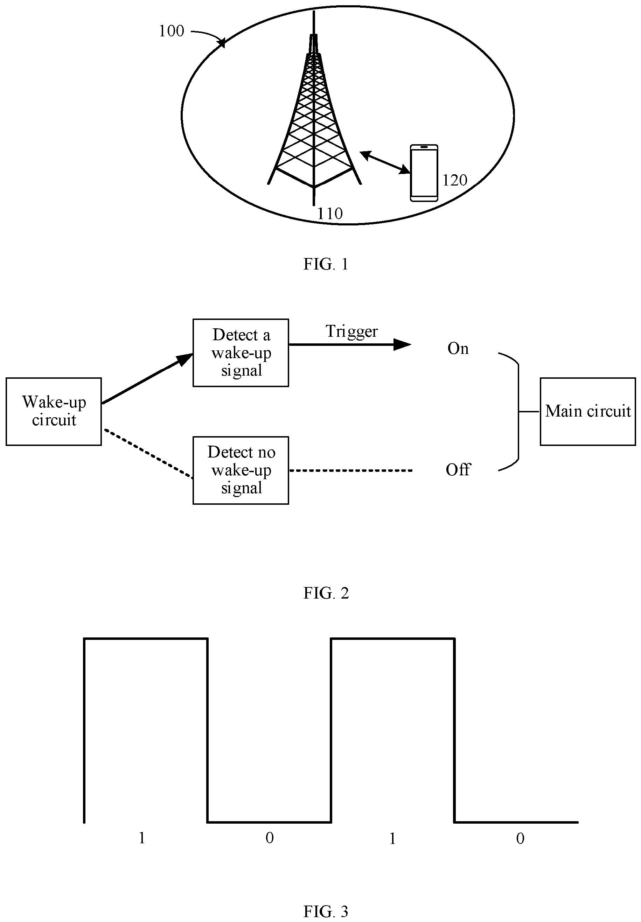

First, a network architecture applicable to embodiments of this application is briefly described below with reference to FIG. 1.

FIG. 1 is a diagram of a wireless communication system 100 applicable to an embodiment of this application. As shown in FIG. 1, the wireless communication system 100 may include at least one network device, for example, a network device 110 shown in FIG. 1. The wireless communication system 100 may further include at least one terminal device, for example, a terminal device 120 shown in FIG. 1. For example, a plurality of antennas may be configured for both the network device and the terminal device, and the network device and the terminal device may communicate with each other by using a multi-antenna technology.

When the network device communicates with the terminal device, the network device may manage one or more cells, and one cell may include at least one terminal device. Optionally, the network device 110 and the terminal device 120 form a single-cell communication system. It is assumed that a cell is denoted as a cell #1. The network device 110 may be a network device in the cell #1, or the network device 110 may serve a terminal device (for example, the terminal device 120) in the cell #1.

It should be noted that the cell may be understood as an area within coverage of a radio signal of the network device.

It should be understood that FIG. 1 is merely a simplified diagram of an example for ease of understanding. The wireless communication system 100 may further include another network device or may further include another terminal device that is not shown in FIG. 1.

For ease of understanding of embodiments of this application, terms in this application are briefly described.

### 1. Paging (paging)

When a terminal device is in an idle (idle) state or an inactive (inactive) state, the terminal device may periodically receive paging. In an example, a paging receiving procedure performed by the terminal device includes the following steps.
(1) The terminal device may obtain, through calculation based on an identifier (identifier, ID) (UE ID) of the terminal device, a paging frame (paging frame, PF) and a location of a paging occasion (paging occasion, PO) in the PF.
(2) The terminal device monitors a physical downlink control channel (physical downlink control channel, PDCCH) (for example, may alternatively be referred to as a paging PDCCH) in the PO. The PDCCH includes downlink control information (downlink control information, DCI) (for example, may alternatively be referred to as paging DCI).
(3) If the terminal device detects the PDCCH, the terminal device receives a physical downlink shared channel (physical downlink shared channel, PDSCH) (for example, may alternatively be referred to as a paging PDSCH) at a location at which the PDCCH is scheduled. The paging PDSCH includes a paging message (paging message), and the paging message may indicate specific paged terminal devices. In an example, the paging PDSCH includes a maximum of 32 paging records (paging records), each paging record may include one UE ID, and the UE ID indicates specific paged UE.

It should be understood that the foregoing paging receiving procedure is merely an example for descriptions. For example, for details, refer to a related standard. This is not limited in this application.

### 2. Main circuit and wake-up circuit

Generally, regardless of whether a terminal device performs a paging receiving procedure in an idle state or an inactive state, or a terminal device receives data in a connected state, a same receiving module, a same receiver, or a same receiver circuit is used. In this application, for ease of descriptions, a module that completes these functions or performs related steps is referred to as the main circuit. It may be understood that the main circuit is merely a name for differentiation, and a specific name does not limit the protection scope of this application. For ease of descriptions, the main circuit is uniformly used for descriptions below.

A signal received by the terminal device through the main circuit may be referred to as being transmitted on a main link. The main link represents a connection relationship between the terminal device and the network device, and is a logical concept rather than a physical entity. It may be understood that the main link is merely a name for differentiation, and a specific name does not limit the protection scope of this application.

When the terminal device receives paging through the main circuit, power consumption is high. For example, when receiving paging, the terminal device first needs to receive a downlink signal by using a receiving module of the main circuit, and then the terminal device further needs to perform blind detection on a PDCCH, decode a received PDSCH, and the like. All these steps cause high power consumption. In addition, because the main circuit is complex, reference power consumption or static power consumption during running of the main circuit is high.

To reduce power consumption caused by receiving paging by the terminal device, in a possible method, the terminal device may receive a signal by using a separate low-power small circuit. The low-power small circuit may be implemented by using a separate small circuit or a chip with a simple structure, with low power consumption. For example, the low-power small circuit may be referred to as a wake-up radio (wake-up radio, WUR), a wake-up circuit, a low-power circuit, a wake-up receiver (wake-up receiver, WUR), or the like. A name of the low-power small circuit is not limited in this application. In this application, for ease of descriptions, the low-power small circuit is referred to as a wake-up circuit. It may be understood that the wake-up circuit is merely a name for differentiation, and a specific name does not limit the protection scope of this application. For ease of descriptions, the wake-up circuit is uniformly used for descriptions below.

The signal received by the terminal device through the wake-up circuit may be referred to as being transmitted on a wake-up link. The wake-up link represents a connection relationship between the terminal device and the network device, and is a logical concept rather than a physical entity. It may be understood that the wake-up link is merely a name for differentiation, and a specific name does not limit the protection scope of this application.

In this embodiment of this application, the signal received by the terminal device through the wake-up circuit, or the signal received by the terminal device on the wake-up link includes at least the following two types: one is a synchronization signal, that is, the signal received by the terminal device on the wake-up link is a synchronization signal; and the other is a wake-up signal, that is, a low power wake-up signal (low power wake-up signal, LP-WUS), that is, the signal received by the terminal device on the wake-up link is a wake-up signal. The synchronization signal and the wake-up signal may be carried in a same signal, or may be carried in different signals. Details are described in detail below with reference to embodiments.

The synchronization signal may be used by the terminal device to implement functions such as timing, synchronization, and link measurement. In a possible manner, the synchronization signal may be generated based on an autocorrelation sequence (for example, a good autocorrelation sequence), so that synchronization accuracy can be improved. In an example, the synchronization signal may be generated based on any one of the following sequences: an M sequence (that is, a maximum length sequence (Maximum length sequence)), a pseudo-random (Pseudo-Noise, PN) sequence, a GOLD sequence, and the like. It should be understood that the foregoing listed synchronization signal is merely an example, and should not constitute any limitation on this application. This application does not exclude a possibility of defining another signal in a future protocol to implement a same or similar function.

The wake-up signal may be used to wake up at least one terminal device or at least one group of terminal devices. In an example, the wake-up signal includes wake-up information, the wake-up information indicates information related to waking up the terminal device, and the wake-up information is, for example, paging-related information. For example, the wake-up information may be used by the terminal device to determine whether to perform a paging receiving procedure, or may be used by the terminal device to determine whether to initiate random access. In an example, the wake-up information includes information (for example, a UE ID) about one or more terminal devices that need to be woken up. The one or more terminal devices may alternatively be in a form of a terminal device group (UE group). Correspondingly, the wake-up information may include a group identifier of the terminal device group.

The synchronization signal and the wake-up information are not described in detail below.

It may be understood that content of information carried in the wake-up signal used to wake up the at least one terminal device is not limited in this embodiment of this application. In other words, specific content of the wake-up information is not limited in this embodiment of this application. Any wake-up information that can be used by the wake-up signal to wake up the at least one terminal device is applicable to this embodiment of this application.

FIG. 2 is a diagram in which a terminal device receives a wake-up signal through a wake-up circuit.

As shown in FIG. 2, when the terminal device receives a signal through the wake-up circuit, if the terminal device detects no wake-up signal associated with the terminal device, the terminal device continues to receive the signal through the wake-up circuit, and a main circuit may be in an off state or a sleep state; or if the terminal device detects a wake-up signal associated with the terminal device, the terminal device triggers wake-up of a main circuit, that is, enables the main circuit to be in/switched to an on state. The on state may alternatively be referred to as an operating state, or referred to as an active state. After the main circuit is turned on, the terminal device may perform a paging receiving procedure. For example, the terminal device receives a paging PDCCH, and receives a paging PDSCH after detecting the paging PDCCH on a PO corresponding to the terminal device. Alternatively, after the main circuit is turned on, the terminal device may directly perform an access procedure. In this case, the wake-up signal received through the wake-up circuit may directly indicate paged UE. After turning on the main circuit, the terminal device does not need to receive paging through the main circuit, but directly initiates random access.

To ensure a power saving gain, the wake-up signal may be modulated by using on-off keying (on-off keying, OOK), and a corresponding wake-up circuit may receive the wake-up signal by using an envelope detection method. Alternatively, the wake-up signal may alternatively be modulated by using frequency shift keying (frequency shift keying, FSK). The following briefly describes the two modulation schemes.
(1) OOK: Information is modulated depending on whether a signal is sent, and a corresponding wake-up circuit may receive the signal by using an envelope detection method. In an OOK modulation technology, demodulation can be implemented by a receiver with extremely low complexity, so that an objective of low power consumption of the wake-up circuit can be achieved.

FIG. 3 is a diagram of a waveform of a wake-up signal modulated by using OOK.

When a signal is modulated by using OOK, each bit, that is, an encoded bit, may correspond to one symbol (symbol). A symbol may alternatively be referred to as a chip (chip), or may be referred to as another name. This is not limited herein.

For example, when the bit is 1, a signal is sent in a symbol length (that is, a signal transmit power is not 0 in the symbol length); or when the bit is 0, no signal is sent in a symbol length (that is, a signal transmit power is 0 in the symbol length). As shown in FIG. 3, the waveform shown in FIG. 3 may represent four bits 1010.

For another example, when the bit is 0, a signal is sent in a symbol length (that is, a signal transmit power is not 0 in the symbol length); or when the bit is 1, no signal is sent in a symbol length (that is, a signal transmit power is 0 in the symbol length). In this case, the waveform shown in FIG. 3 may represent four bits 0101.

(2) FSK: A modulation technology in which information is modulated on a carrier frequency. When FSK modulation is used, one symbol may carry at least one piece of bit information. For example, it is assumed that an information bit that needs to be transmitted is a sequence including 0 and 1, and a modulated signal has four possible locations in frequency domain. For example, a signal with a sending frequency of *f*₁ represents that a bit "00" is transmitted, a signal with a sending frequency of *f*₂ represents that a bit "01" is transmitted, a signal with a sending frequency of *f*₃ represents that a bit "10" is transmitted, and a signal with a sending frequency of *f*₄ represents that a bit "11" is transmitted. At a receive end, a frequency discriminator circuit may be used to detect a frequency of a received signal. If the signal frequency of *f*₁ is detected, it is determined that the received bit is 00; if the signal frequency of *f*₂ is detected, it is determined that the received bit is 01; if the signal frequency of *f*₃ is detected, it is determined that the received bit is 10; or if the signal frequency of *f*₄ is detected, it is determined that the received bit is 11.

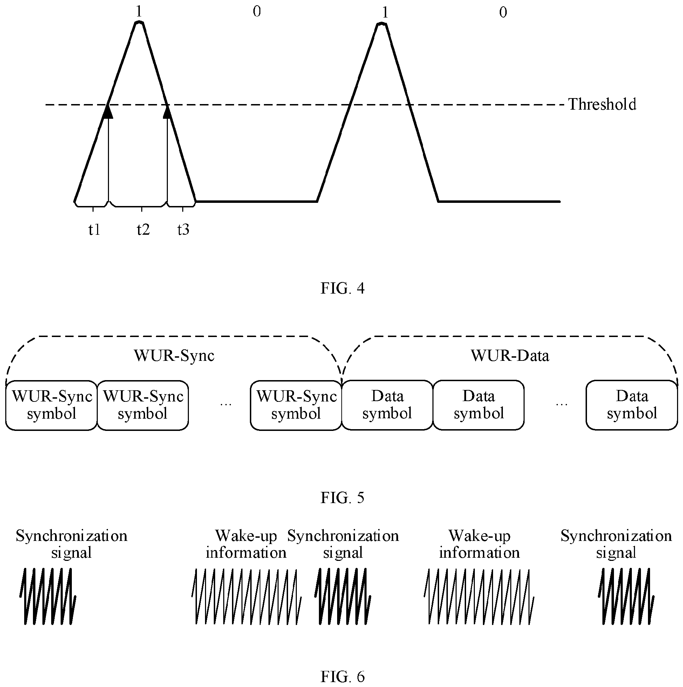

After a signal passes through a channel, distortion may occur due to impact of a channel state and the like. The waveform modulated by using OOK shown in FIG. 3 is used as an example. The waveform shown in FIG. 3 may become a waveform shown in FIG. 4 at a receive end.

FIG. 4 is a diagram of a waveform after a signal passes through a channel. To determine whether a signal corresponds to 0 or 1, the terminal device may compare a received level value of the signal with a threshold (where the threshold is shown by a dashed line in FIG. 4). For example, if the level value of the signal received by the terminal device is greater than the threshold, it indicates that the signal corresponds to 1; or if the level value of the signal received by the terminal device is less than the threshold, it indicates that the signal corresponds to 0. As shown in FIG. 4, if a time location at which the terminal device compares the received level value of the signal with the threshold is within a range of t2, determining is accurate; or if a time location at which the terminal device compares the received level value of the signal with the threshold is within a range of t1 or t3, determining is inaccurate, that is, 1 is incorrectly determined as 0.

Therefore, when the terminal device receives the wake-up signal through the wake-up circuit, to correctly receive the wake-up signal, time synchronization of a first link needs to be obtained. That is, the terminal device may obtain a symbol boundary location, and determine, based on the boundary location, whether the signal corresponds to a time location of 0 or 1. For example, the terminal device may determine, by using a level value at a middle location of a symbol, whether the signal corresponds to 0 or 1.

In addition, because local clock precision of the terminal device is limited, time drift may occur. If the first link does not provide a synchronization function, after the terminal device works on the first link for a period of time, a problem of time asynchronization between the terminal device and a network device (that is, symbol boundary locations considered by the terminal device and the network device are inconsistent) may occur. Consequently, signal receiving is affected. In a possible manner, time synchronization may be performed by using a synchronization signal. The following describes two manners of sending a synchronization signal.

Manner 1: The synchronization signal is sent along with a wake-up signal.

FIG. 5 is a diagram of a synchronization signal sent along with a wake-up signal. As shown in FIG. 5, a synchronization signal (that is, WUR-Sync in FIG. 5) and a data part (that is, WUR-Data in FIG. 5) (for example, wake-up information) may be sent along with each other. In other words, the synchronization signal is closely followed by the wake-up information, or a wake-up signal includes the synchronization signal and the wake-up information. It may be understood that FIG. 5 is merely an example for descriptions, and a specific frame structure of the wake-up signal is not limited in this application.

A transmit end sends a wake-up signal, and then sends an associated synchronization signal. In a manner of sending a synchronization signal along with a wake-up signal, a reference synchronization signal may be available for each data sending, to facilitate data receiving. However, the associated synchronization signal is sent only when data is transmitted. In this case, if no terminal device is woken up within a period of time, the network device does not send a synchronization signal. In this case, the terminal device cannot determine whether quality of a wake-up link is good enough, or whether to switch to a main link.

Manner 2: The synchronization signal is periodically sent.

FIG. 6 is a diagram of periodically sending a synchronization signal. As shown in FIG. 6, the synchronization signal may be periodically sent. The terminal device may perform link measurement based on the periodically sent synchronization signal, so that the terminal device determines whether to switch from a wake-up link to a main link. For example, when the terminal device does not receive a periodic synchronization signal in a period of time, the terminal device may determine that the terminal device may not be in coverage of a wake-up link signal, or the terminal device falls in a coverage hole of a wake-up link signal. Therefore, in an example, the terminal device may switch to the main link to receive paging in a manner of receiving paging in a legacy (legacy) NR system (that is, in a manner of monitoring a paging PDCCH, and detecting a paging message when receiving the paging PDCCH).

However, a manner of periodically sending the synchronization signal cannot be adjusted with a change of wake-up load, for example, paging load (paging load). For example, even if current wake-up load is small, that is, the network side needs to page a small quantity of terminals, that is, the network side sends a small amount of wake-up information, the network side still needs to send the synchronization signal in a fixed periodicity. Consequently, resource overheads are greater than those caused by sending the synchronization signal along with a wake-up signal.

It can be learned from Manner 1 and Manner 2 that, if the synchronization signal is periodically sent, although a stable link measurement function can be provided, adaptive adjustment cannot be performed based on paging load; and if the synchronization signal is sent along with the wake-up signal, although adaptive adjustment can be performed based on paging load, a stable measurement function cannot be provided. Therefore, in Manner 1 and Manner 2, stable measurement and paging load cannot be both satisfied.

In this application, functions of the synchronization signal mainly include the following two aspects: link measurement and assistance in demodulating the wake-up information.
(1) The link measurement means that the network device needs to send a synchronization signal at least once within a specific time range (for example, represented by T1), and correspondingly, the terminal device needs to receive the synchronization signal at least once within a specific time range (for example, represented by T1), so that the terminal device determines whether quality of a wake-up link is good enough and whether the terminal device needs to switch to a main link.
(2) The assistance in demodulating the wake-up information means that a time interval between the synchronization signal and a wake-up signal sent by the network device cannot be excessively large (for example, does not exceed T2), to ensure that the terminal device demodulates the wake-up signal (that is, demodulates the wake-up information in the wake-up signal) within time and/or frequency precision that meets a demodulation requirement. Generally, T1 is greater than T2. For example, T2 is approximately dozens of ms, and T1 is approximately hundreds of ms or several seconds.

Based on the foregoing analysis, this application provides a solution. A manner of sending the synchronization signal is designed based on a function of the synchronization signal, to implement both stable link measurement and assistance in demodulating the wake-up information.

It may be understood that the term "and/or" in this specification describes only an association relationship between associated objects and indicates that three relationships may exist. For example, A and/or B may represent the following three cases: Only A exists, both A and B exist, and only B exists. In addition, the character "/" in this specification generally indicates an "or" relationship between the associated objects.

It may be further understood that, in this application, information indicated by indication information is referred to as to-be-indicated information. In a specific implementation process, the to-be-indicated information is indicated in a plurality of manners, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and other parts of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

With reference to the accompanying drawings, the following describes in detail a method provided in embodiments of this application. Embodiments provided in this application may be applied to the network architecture shown in FIG. 1. This is not limited.

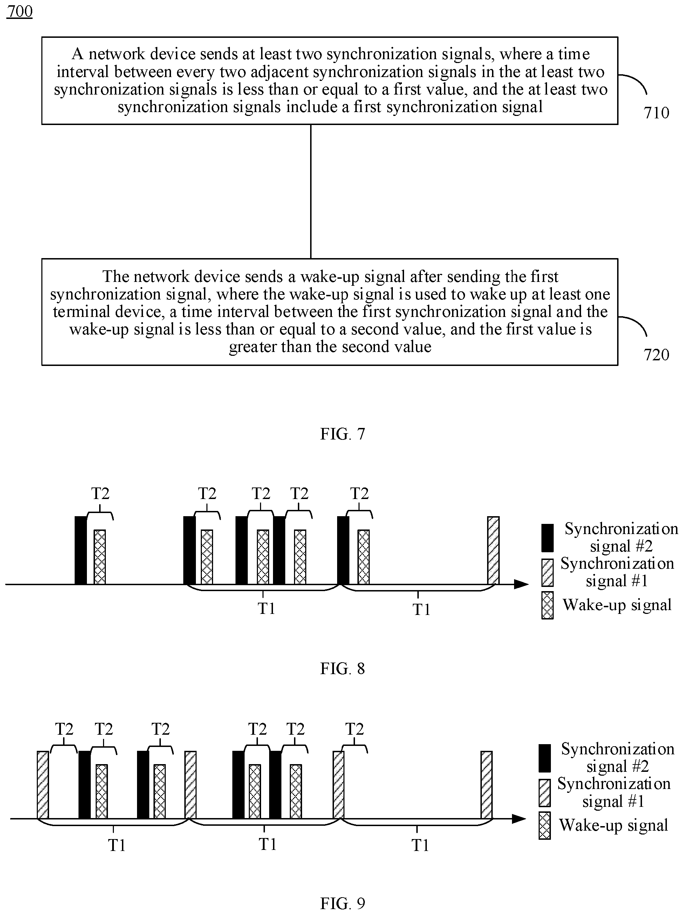

FIG. 7 is a diagram of a signal transmission method 700 according to an embodiment of this application. The method 700 may include the following steps.

710: A network device sends at least two synchronization signals, where a time interval between every two adjacent synchronization signals in the at least two synchronization signals is less than or equal to a first value, and the at least two synchronization signals include a first synchronization signal.

Correspondingly, the terminal device may receive the at least two synchronization signals. It may be understood that, in actual communication, due to some factors such as a communication environment, the terminal device may receive some of the at least two synchronization signals sent by the network device. This is not limited.

For example, assuming that the at least two synchronization signals include a synchronization signal #1, a synchronization signal #2, and a synchronization signal #3, the network device sequentially sends the synchronization signal #1, the synchronization signal #2, and the synchronization signal #3. Based on this embodiment of this application, a time interval between the synchronization signal #1 and the synchronization signal #2 is less than or equal to the first value, and a time interval between the synchronization signal #2 and the synchronization signal #3 is less than or equal to the first value.

In an example, the synchronization signal may be used for at least one of the following: link measurement performed by the terminal device, and assistance in demodulating a wake-up signal by the terminal device.

The first value may be a value greater than 0, or may be a value range greater than 0. This is not limited. In addition, the first value may be predefined, for example, predefined in a standard, or may be configured by the network device. This is not limited. In an example, the first value is T1. To be specific, the network device sends the synchronization signal at least once within the first value range, so that the terminal device determines whether quality of a wake-up link is good enough and whether the terminal device needs to switch to a main link.

The time interval between every two adjacent synchronization signals in the at least two synchronization signals may be greater than 0. In addition, the time interval between every two adjacent synchronization signals in the at least two synchronization signals may be partially the same, or may be all the same, or may be all different.

Optionally, all or some of the at least two synchronization signals are periodically sent. It is assumed that a periodicity of the synchronization signal periodically sent in the at least two synchronization signals is T, and the periodicity T is less than or equal to the first value.

A manner in which the network device sends the at least two synchronization signals is described in detail below.

720: The network device sends a wake-up signal after sending the first synchronization signal, where the wake-up signal is used to wake up at least one terminal device, a time interval between the first synchronization signal and the wake-up signal is less than or equal to a second value, and the first value is greater than the second value.

Correspondingly, the at least one terminal device may receive the wake-up signal, where the at least one terminal device may be at least one terminal device woken up by the wake-up signal, or may be another terminal device. This is not limited.

The first synchronization signal indicates a synchronization signal with a time interval from the wake-up signal that is less than or equal to the second value, and the first synchronization signal may be used to assist the terminal device in demodulating the wake-up signal. The first synchronization signal is named for differentiation, and the name of the first synchronization signal does not limit the protection scope of embodiments of this application.

The second value may be a value greater than 0, or may be a value range greater than 0. This is not limited. In addition, the second value may be predefined, for example, predefined in a standard, or may be configured by the network device. This is not limited. In an example, the second value is T2. That is, the time interval between the synchronization signal and the wake-up signal that are sent by the network device cannot be excessively large (for example, less than or equal to the second value). In this way, the terminal device may perform timing and synchronization based on the synchronization signal, to improve demodulation performance of the terminal device in demodulating the wake-up signal.

Based on this embodiment of this application, the time interval between the synchronization signal and the wake-up signal that are sent by the network device is less than or equal to the second value. This helps the terminal device perform timing and synchronization based on the synchronization signal with the time interval from the wake-up signal that is less than or equal to the second value, to improve demodulation performance of the terminal device in demodulating the wake-up signal. In addition, the time interval between adjacent synchronization signals is less than or equal to the first value. In other words, the network device sends the synchronization signal at least once at the time interval within the first value range, so that the terminal device can receive the synchronization signal at intervals of a period of time (for example, the time interval within the first value range), and may perform link measurement based on the synchronization signal, and does not need to frequently send the synchronization signal, that is, provided that the synchronization signal is received at the time interval within the first value range. Therefore, in this application, the time interval between the first synchronization signal and the wake-up signal is less than or equal to the second value, and the time interval between the adjacent synchronization signals is less than or equal to the first value, so that overheads of the synchronization signal can be reduced when a demodulation requirement is met. In other words, the time interval between the adjacent synchronization signals is less than or equal to the first value, and the synchronization signals used for link measurement do not need to be frequently sent.

As described above, the terminal device performs link measurement at intervals of a period of time (for example, the time interval within the first value range), so that the terminal device can determine whether quality of the wake-up link is good enough. For example, if the quality of the wake-up link measured by the terminal device is poor, the terminal device may switch to the main link in a timely manner, so that the terminal device can continue to monitor the wake-up signal through the main link, to avoid a case in which the wake-up signal cannot be received because the quality of the wake-up link is poor. If the quality of the wake-up link measured by the terminal device is good, the terminal device may continue to receive the wake-up signal on the wake-up link.

For brevity and ease of descriptions, the solutions in embodiments of this application is described below by using an example in which the first value is T1 and the second value is T2. That is, in the following embodiments, T1 may be replaced with the first value, and T2 may be replaced with the second value.

First, for example, the network device sends a synchronization signal, and a manner of sending the synchronization signal is described.

Manner 1: The synchronization signal is aperiodically sent.

Based on Manner 1, the network device may send the synchronization signal based on an actual communication status and a time interval between adjacent synchronization signals that is less than T1 or equal to T1. In this way, it can be ensured that the terminal device can perform link measurement based on the synchronization signal within T1. In addition, as described in step 720, the time interval between the first synchronization signal and the wake-up signal is less than T2 or equal to T2. Therefore, the terminal device may perform timing and synchronization based on the synchronization signal (for example, the first synchronization signal), to improve demodulation performance of the terminal device in demodulating the wake-up signal.

For example, when the time interval between adjacent synchronization signals is less than T1 or equal to T1, if the network device needs to wake up at least one terminal device, the network device sends a synchronization signal (for example, the first synchronization signal) before sending a wake-up signal used to wake up the at least one terminal device, so that the at least one terminal device can perform timing and synchronization based on the synchronization signal, to improve demodulation performance of the terminal device in demodulating the wake-up signal.

FIG. 8 is a diagram of sending a synchronization signal.

As shown in FIG. 8, it is assumed that at least two synchronization signals include at least one synchronization signal #1 and at least one synchronization signal #2 (for example, a first synchronization signal). In an example, the synchronization signal #1 may be used by the terminal device to perform link measurement, and the synchronization signal #2 may be used to assist the terminal device in demodulating wake-up information. The synchronization signal #1 and the synchronization signal #2 may be a same signal, but have different functions. Alternatively, the synchronization signal #1 and the synchronization signal #2 have different functions and signals. For example, the synchronization signal #1 and the synchronization signal #2 have different formats (formats). This is not limited herein.

As shown in FIG. 8, a time interval between adjacent synchronization signals is less than T1 or equal to T1, the network device sends a synchronization signal #2 before sending a wake-up signal, and a time interval between the synchronization signal #2 and the wake-up signal is less than T2 or equal to T2. When the network device does not send the wake-up signal, to meet a requirement of the terminal device for performing link measurement based on the synchronization signal, the network device may send the synchronization signal #1 when a time interval between adjacent synchronization signals is less than T1 or equal to T1. As shown in FIG. 8, after a fifth synchronization signal #2 in the figure, the network device no longer sends the synchronization signal #2 because of sending the wake-up signal. In addition, to meet a requirement of the terminal device for performing link measurement based on the synchronization signal, the network device may send the synchronization signal #1 at a location at a time interval equal to T1 after the fifth synchronization signal #2 in the figure, so that the terminal device can perform link measurement based on the synchronization signal #1.

Manner 2: Some synchronization signals are periodically sent, and some synchronization signals are aperiodically sent. That is, some of at least two synchronization signals are periodically sent. It is assumed that a periodicity of the periodically sent synchronization signal is T. As described above, T is less than T1 or equal to T1.

For differentiation, a periodically sent synchronization signal is denoted as a synchronization signal #1, and an aperiodically sent synchronization signal is denoted as a synchronization signal #2 (for example, a first synchronization signal). In an example, the synchronization signal #1 may be used by the terminal device to perform link measurement, and the synchronization signal #2 may be used to assist the terminal device in demodulating wake-up information.

Based on Manner 2, the network device may periodically send the synchronization signal #1, and send the synchronization signal #2 based on an actual communication status. A periodicity of the synchronization signal #1 is less than T1 or equal to T1. In this way, it can be ensured that the terminal device can perform link measurement based on the synchronization signal #1 within T1.

For example, the network device periodically sends the synchronization signal #1, and if the network device needs to wake up at least one terminal device, the network device sends the synchronization signal #2 before sending the wake-up signal used to wake up the at least one terminal device, so that the terminal device can perform timing and synchronization based on the synchronization signal #2, to improve demodulation performance of the terminal device in demodulating the wake-up signal.

FIG. 9 is another diagram of sending a synchronization signal.

As shown in FIG. 9, a network device periodically sends the synchronization signal #1. Between the periodic synchronization signal #1, the network device may determine, based on an actual communication status, whether to send a synchronization signal #2. Specifically, the network device sends the synchronization signal #2 before sending the wake-up signal, and a time interval between the synchronization signal #2 and a wake-up signal is less than T2 or equal to T2. For example, if the network device does not send any synchronization signal within T2 before the network device prepares to send the wake-up signal, the network device needs to send the synchronization signal #2, and then send the wake-up signal, so that the terminal device can perform timing and synchronization based on the synchronization signal #2, to improve demodulation performance of the terminal device in demodulating the wake-up signal. When the network device does not send the wake-up signal, the network device may not need to send the synchronization signal #2, to reduce resource overheads of the synchronization signal.

Manner 3: The synchronization signal is sent on a candidate occasion. For example, the network device sends at least two synchronization signals on some or all of N candidate occasions, where N is an integer greater than 1. Correspondingly, the terminal device may receive the at least two synchronization signals on some or all of the N candidate occasions.

The candidate occasion represents a candidate occasion of a synchronization signal, that is, a possible time domain location of the synchronization signal. In other words, if the network device needs to send the synchronization signal, the network device sends the synchronization signal on the candidate occasion, but the synchronization signal is not limited to be definitely sent on the candidate occasion. For example, for the N candidate occasions, the synchronization signal may be sent on all the N candidate occasions, or the synchronization signal may be sent on some of the N candidate occasions. This is not limited.

In addition, in some cases, one synchronization signal may be sent on one candidate occasion. In other cases, at least two signals (the at least two signals may be both synchronization signals, or may be synchronization signals and other signals) may be sent on one candidate occasion. For example, different signals may occupy different frequency domain locations on a same candidate occasion. This is not limited. For example, one synchronization signal is sent on one candidate occasion for descriptions below.

Based on Manner 3, the network device sends the synchronization signal on the candidate occasion, and correspondingly, the terminal device may monitor the synchronization signal on the candidate occasion. In this way, the terminal device only needs to monitor the synchronization signal on the candidate occasion, and does not need to monitor the synchronization signal at any location, to reduce power consumption caused by monitoring the synchronization signal.

The candidate occasion may be preconfigured, for example, preconfigured by the network device and notified to the terminal device; or may be predefined in a standard. This is not limited.

Optionally, the candidate occasion is periodic. For example, a periodicity of the candidate occasion may be less than T2 or equal to T2. The following describes two implementations, namely, Manner 3A and Manner 3B, by using a candidate occasion with a periodicity of T2.

Manner 3A: The synchronization signal is sent aperiodically on a candidate occasion.

Based on Manner 3A, the network device may determine, based on an actual communication status and a time interval between adjacent synchronization signals that is less than T1 or equal to T1, specific candidate occasions on which the synchronization signal is sent. In this way, it can be ensured that the terminal device can perform link measurement based on the synchronization signal within T1. In addition, as described in step 720, the time interval between the first synchronization signal and the wake-up signal is less than T2 or equal to T2. Therefore, the terminal device may further perform timing and synchronization based on the synchronization signal (for example, the first synchronization signal), to improve demodulation performance of the terminal device in demodulating the wake-up signal.

For example, when the time interval between adjacent synchronization signals is less than T1 or equal to T1, if the network device needs to wake up at least one terminal device, the network device sends a synchronization signal on a candidate occasion before sending a wake-up signal used to wake up the at least one terminal device, so that the at least one terminal device can perform timing and synchronization based on the synchronization signal, to improve demodulation performance of the terminal device in demodulating the wake-up signal. In an example, the network device may send the synchronization signal on a candidate occasion previous to a location of the wake-up signal.

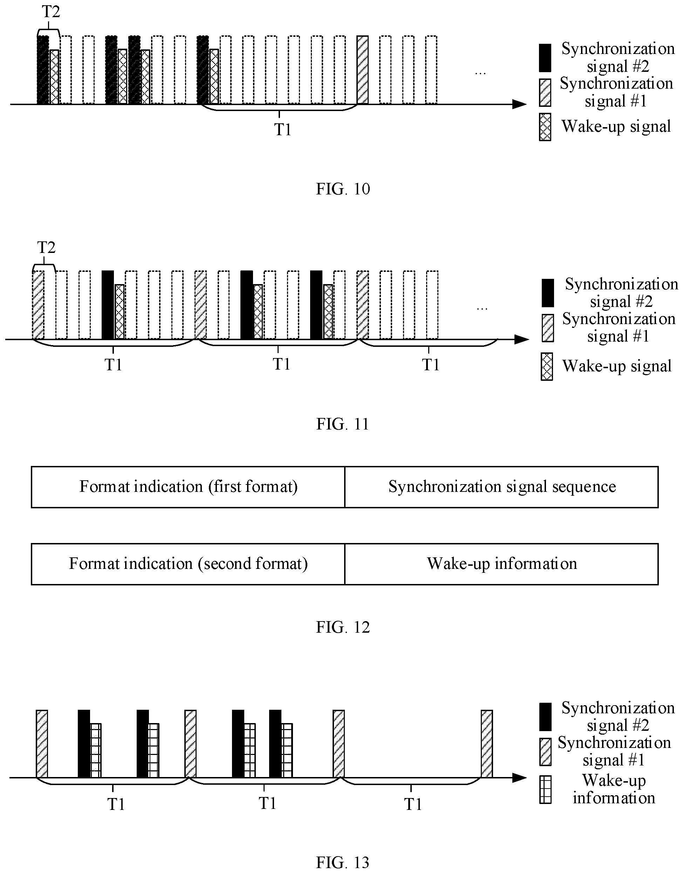

FIG. 10 is another diagram of sending a synchronization signal.

As shown in FIG. 10, it is assumed that at least two synchronization signals include at least one synchronization signal #1 and at least one synchronization signal #2 (for example, a first synchronization signal). For the synchronization signal #1 and the synchronization signal #2, refer to related descriptions in Manner 1. Details are not described herein again.

As shown in FIG. 10, a periodicity of a candidate occasion is T2, and a time interval between adjacent synchronization signals is less than T1 or equal to T1. In addition, the network device sends the synchronization signal #2 on a candidate occasion before sending the wake-up signal, and a time interval between the synchronization signal #2 and a wake-up signal is less than T2 or equal to T2. When the network device does not send the wake-up signal, to meet a requirement of the terminal device for performing link measurement based on the synchronization signal, the network device may send the synchronization signal #1 on the candidate occasion when a time interval between adjacent synchronization signals is less than T1 or equal to T1. As shown in FIG. 10, after a fourth synchronization signal #2 in the figure, the network device no longer sends the synchronization signal #2 because of sending the wake-up signal. In addition, to meet a requirement of the terminal device for performing link measurement based on the synchronization signal, the network device may send the synchronization signal #1 on a candidate occasion at a time interval equal to T1 after the fourth synchronization signal #2, so that the terminal device can perform link measurement based on the synchronization signal #1.

Manner 3B: Some synchronization signals are periodically sent on a candidate occasion, and some synchronization signals are aperiodically sent on a candidate occasion. For example, some of at least two synchronization signals are periodically sent on a candidate occasion. A periodicity of the periodically sent synchronization signal is less than T1 or equal to T1.

For differentiation, a periodically sent synchronization signal is denoted as a synchronization signal #1, and an aperiodically sent synchronization signal is denoted as a synchronization signal #2 (for example, a first synchronization signal). For the synchronization signal #1 and the synchronization signal #2, refer to related descriptions in Manner 1. Details are not described herein again.

Based on Manner 3B, the network device may periodically send the synchronization signal #1 on the candidate occasion, and determine, based on an actual communication status, specific candidate occasions on which the synchronization signal #2 is sent. A periodicity of the synchronization signal #1 is less than T1 or equal to T1. In this way, it can be ensured that the terminal device can perform link measurement based on the synchronization signal (for example, the synchronization signal #1) within T1. In addition, because the synchronization signal #1 is periodically sent on the candidate occasion, the periodicity of the synchronization signal #1 may be an integer multiple of the periodicity of the candidate occasion.

For example, the network device periodically sends the synchronization signal #1 on the candidate occasion, and if the network device needs to wake up at least one terminal device, the network device sends the synchronization signal #2 on the candidate occasion before sending the wake-up signal used to wake up the at least one terminal device, so that the terminal device can perform timing and synchronization based on the synchronization signal #2, to improve demodulation performance of the terminal device in demodulating the wake-up signal.

FIG. 11 is another diagram of sending a synchronization signal.

As shown in FIG. 11, a network device periodically sends a synchronization signal #1 on a candidate occasion. A periodicity of the synchronization signal #1 is, for example, T1, and T1 may be an integer multiple of T2. On another candidate occasion, the network device may determine, based on an actual communication status, whether to send a synchronization signal #2. Specifically, the network device sends the synchronization signal #2 on a candidate occasion before sending a wake-up signal, and a time interval between the synchronization signal #2 and the wake-up signal is less than T2 or equal to T2. For example, if the network device does not send any synchronization signal within T2 before the network device prepares to send the wake-up signal, the network device needs to send the synchronization signal #2 on the candidate occasion, and then send the wake-up signal, so that the terminal device can perform timing and synchronization based on the synchronization signal #2, to improve demodulation performance of the terminal device in demodulating the wake-up signal. When the network device does not send the wake-up signal, the network device may not need to send the synchronization signal #2 on the candidate occasion, to reduce resource overheads of the synchronization signal.

It may be understood that the foregoing manner of sending the synchronization signal on the candidate occasion is an example for descriptions, and this embodiment of this application is not limited thereto. Any variation of the foregoing solution is applicable to this embodiment of this application. The foregoing N candidate occasions are used as an example. For example, some of the N candidate occasions are used to send the synchronization signal #1, and some candidate occasions are used to send the synchronization signal #2. In other words, the synchronization signal #1 and the synchronization signal #2 each have candidate occasions, and available candidate occasions of the synchronization signal #1 and the synchronization signal #2 do not completely overlap. When performing link measurement, the terminal device may monitor the synchronization signal #1 on the candidate occasions corresponding to the synchronization signal #1. For another example, the N candidate occasions are used to send the synchronization signal #1, that is, the network device sends the synchronization signal #1 on some or all of the N candidate occasions. The network device may send the synchronization signal #2 at any location based on an actual communication status.

It may be further understood that Manner 3 is mainly described with reference to a candidate occasion, a time interval between two adjacent synchronization signals that is less than T1 or equal to T1, and a time interval between a synchronization signal and a wake-up signal that is less than or equal to T2. It may be understood that a solution of the candidate occasion may alternatively be used independently. In an example, the network device sends the synchronization signal on some or all of the N candidate occasions. In this way, the terminal device only needs to monitor the synchronization signal on the candidate occasion, and does not need to monitor the synchronization signal at any location, to reduce power consumption caused by monitoring the synchronization signal.

The foregoing is combined with the manners of sending the synchronization signal in Manner 1 to Manner 3. It may be understood that any variation of Manner 1 to Manner 3 is applicable to this embodiment of this application. For example, a solution provided that a time interval between adjacent synchronization signals is less than or equal to a first value, and a time interval between a synchronization signal (for example, a first synchronization signal) and a wake-up signal used to wake up a terminal device is greater than or equal to a second value is applicable to this embodiment of this application. The following describes the technical solutions in embodiments of this application. The following solutions may be used in combination with the foregoing manner of sending the synchronization signal, or may be used independently.

Optionally, the time interval between every two adjacent synchronization signals in the at least two synchronization signals is greater than or equal to T2. That is, the time interval between adjacent synchronization signals is less than T1 or equal to T1, and the time interval between adjacent synchronization signals is greater than T2 or equal to T2. Based on this, when it is ensured that the time interval between the synchronization signal and the wake-up signal is less than T2 or equal to T2, the network device may no longer send the synchronization signal within duration of T2 after sending the synchronization signal. In this way, resource overheads of the synchronization signal can be reduced.

For example, the network device sends the at least two synchronization signals, and for each of the at least two synchronization signals, the network device does not send the synchronization signal within duration of T2 after sending the synchronization signal; or for some of the at least two synchronization signals, the network device does not send the synchronization signal within duration of T2 after sending the synchronization signal. The network device may determine, based on an actual status, whether to send remaining synchronization signals. This is not limited.

In a possible case, the time interval between adjacent synchronization signals is equal to T2.

In another possible case, the time interval between adjacent synchronization signals is greater than T2. In this case, time intervals between adjacent synchronization signals may be the same or may be different, provided that the time interval between the adjacent synchronization signals is greater than T2, and the time interval between the adjacent synchronization signals is less than T1 or equal to T1.

In another possible case, the time interval between some adjacent synchronization signals is greater than T2, and the time interval between some adjacent synchronization signals is equal to T2.

Optionally, the network device no longer sends the synchronization signal in a first time period after sending the synchronization signal (for example, a first synchronization signal). Correspondingly, the terminal device monitors a wake-up signal in the first time period after receiving the synchronization signal (for example, the first synchronization signal); or the terminal device no longer monitors the synchronization signal in a first time period after receiving the synchronization signal (for example, the first synchronization signal); or the terminal device monitors a wake-up signal and no longer monitors the synchronization signal in a first time period after receiving the synchronization signal (for example, the first synchronization signal). The monitoring a wake-up signal may be replaced with monitoring wake-up information. A start location of the first time period is a moment at which the terminal device receives the first synchronization signal, or a start location of the first time period is a start location or an end location of the first synchronization signal, and duration of the first time period is less than T2 or equal to T2. The duration of the first time period may be predefined, for example, predefined in a standard, or may be configured by the network device. This is not limited. FIG. 8 to FIG. 11 are used as an example. The terminal device monitors the wake-up signal and no longer monitors the synchronization signal within T2 after receiving the synchronization signal #1 or the synchronization signal #2.

Based on this, the synchronization signal may be further used by the terminal device to determine whether to monitor the wake-up signal. To be specific, if the terminal device receives a synchronization signal, the terminal device monitors the wake-up signal in the first time period after receiving the synchronization signal, and does not monitor the synchronization signal in the first time period. Further, optionally, the terminal device monitors a synchronization signal (denoted as a second synchronization signal for differentiation) after the first time period, and does not monitor the wake-up signal before the terminal device detects the second synchronization signal. For example, if the terminal device detects no wake-up signal in the first time period after receiving the first synchronization signal, the terminal device monitors the second synchronization signal after the first time period and does not monitor the wake-up signal. If the terminal device detects the wake-up signal in the first time period after receiving the first synchronization signal, and the detected wake-up signal does not wake up the terminal device, the terminal device monitors the second synchronization signal after the first time period and does not monitor the wake-up signal. If the terminal device detects the wake-up signal in the first time period after receiving the first synchronization signal, and the detected wake-up signal wakes up the terminal device, the terminal device may perform a corresponding operation (for example, initiate random access, directly access the network device, perform a paging receiving procedure, or the like) based on the wake-up signal. The second synchronization signal is a 1st synchronization signal after the first synchronization signal.

For example, after receiving the first synchronization signal, the terminal device may attempt to monitor the wake-up signal in the first time period, and may not need to monitor another synchronization signal in the first time period. If the terminal device detects a wake-up signal in the first time period, the terminal device may demodulate the wake-up signal, to determine whether the wake-up signal is a wake-up signal for waking up the terminal device, or determine wake-up information in the wake-up signal. Because the time interval between the first synchronization signal and the wake-up signal is less than T2 or equal to T2, it can be ensured as much as possible that the wake-up information is demodulated within duration and/or frequency precision at which the terminal device meets a demodulation requirement. Further, if the terminal device is not woken up in the first time period (the terminal device does not detect a wake-up signal that carries wake-up information for waking up the terminal device), the terminal device continues to monitor the second synchronization signal after the first time period and no longer monitors the wake-up signal; or if the terminal device detects the second synchronization signal, the terminal device continues to attempt to monitor the wake-up signal in the first time period after the second synchronization signal, and no longer monitors another synchronization signal.

In a possible implementation, after receiving the synchronization signal (or when the terminal device receives the synchronization signal), the terminal device starts a timer. Running duration of the timer is duration of the first time period. During running of the timer, the terminal device monitors the wake-up signal, and may not monitor the synchronization signal. Further, optionally, if the terminal device is not woken up during running of the timer, after the timer expires, the terminal device continues to monitor the synchronization signal, and may not monitor the wake-up signal.

The foregoing solution in which the terminal device monitors the wake-up signal in the first time period after receiving the synchronization signal may be used in combination with the solution in which the time interval between adjacent synchronization signals is greater than or equal to T2. For example, the network device no longer sends the synchronization signal in a preset time period #1 in which the synchronization signal is sent each time. Correspondingly, the terminal device monitors the wake-up information in the preset time period #1 in which the synchronization signal is received, and does not need to monitor the synchronization signal.

Optionally, the time interval between every two adjacent synchronization signals in the at least two synchronization signals is greater than the time interval between the first synchronization signal and the wake-up signal. In this way, if a demodulation requirement is met, the time interval between every two adjacent synchronization signals in the at least two synchronization signals may be greater than the time interval between the first synchronization signal and the wake-up signal, to further reduce overheads of the synchronization signal. In the examples shown in FIG. 8 to FIG. 11, the time interval between every two adjacent synchronization signals is greater than a time interval between the synchronization signal #2 and the wake-up signal.

Optionally, the synchronization signal and the wake-up signal have different formats. Based on this, whether the signal is a wake-up signal or a synchronization signal may be distinguished based on a format of the signal.

For example, if the network device sends the synchronization signal, a format of the synchronization signal sent by the network device is a first format; or if the network device sends the wake-up signal, a format of the wake-up signal sent by the network device is a second format.

FIG. 12 is a diagram of a synchronization signal and a wake-up signal.

As shown in FIG. 12, the synchronization signal includes a format indication and a synchronization signal sequence, and the format indication in the synchronization signal indicates that a format of the synchronization signal is a first format. The wake-up signal includes a format indication and wake-up information, and the format indication in the wake-up signal indicates that a format of the wake-up signal is a second format. It may be understood that the wake-up signal or the synchronization signal may further include another field. This is not limited herein.

The foregoing describes a related solution in which the synchronization signal and the wake-up signal are not sent along with each other. The following describes a solution in which a synchronization signal is sent along with a wake-up signal.

Optionally, a terminal device receives at least two wake-up signals from a network device, where the at least two wake-up signals include a first wake-up signal and a second wake-up signal, the first wake-up signal includes a first synchronization signal and an identifier of at least one terminal device, the first wake-up signal is used to wake up the at least one terminal device, the second wake-up signal includes a second synchronization signal and indication information, and the indication information represents that the second wake-up signal does not wake up any terminal device. The identifier of the at least one terminal device is used to identify a terminal device to be woken up by the first wake-up signal.

The first synchronization signal and the second synchronization signal are named for differentiation. In an example, the first synchronization signal is used to assist the terminal device in demodulating the wake-up signal, and the second synchronization signal is used by the terminal device to perform link measurement.

The first wake-up signal and the second wake-up signal are named for differentiation. The first wake-up signal represents a wake-up signal used to wake up the terminal device, and the second wake-up signal represents a wake-up signal that does not wake up any terminal device.

In this embodiment of this application, the synchronization signal and the identifier of the terminal device may be sent along with a wake-up signal. Considering that if no terminal device is woken up within a period of time, to facilitate link measurement by the terminal device, the network device may also send a wake-up signal. If the wake-up signal carries wake-up information and a synchronization signal, the wake-up information in the wake-up signal may cause a false wake-up of some terminal devices. In this case, in this embodiment of this application, if the wake-up signal is not used to wake up the terminal device, the wake-up signal carries the synchronization signal and the indication information. In other words, if the wake-up signal includes the synchronization signal and the identifier of the at least one terminal device, the wake-up signal is used to wake up the at least one terminal device; or if the wake-up signal includes the synchronization signal and the indication information, the wake-up signal does not wake up any terminal device.

In a first possible implementation, two wake-up signals, that is, the first wake-up signal and the second wake-up signal, are distinguished based on identifiers carried in the wake-up signals. For example, the indication information is a preset value. In an example, the preset value may be an identifier with a value being the preset value. For example, the value of the preset value is "all 0s" or "all 1s".

Based on this implementation, the first wake-up signal includes the first synchronization signal and the identifier of the at least one terminal device, and the first wake-up signal is used to wake up the at least one terminal device; and the second wake-up signal includes the second synchronization signal and the preset value, and the second wake-up signal is not used to wake up the terminal device. After receiving the second wake-up signal, the terminal device may learn, based on the preset value in the second wake-up signal, that the second wake-up signal is not used to wake up the terminal device. The terminal device may perform a corresponding operation based on the synchronization signal in the second wake-up signal, for example, perform link measurement or synchronization. According to this design, when no terminal device is woken up in a period of time, that is, when the network device does not send the wake-up information, the terminal device may also perform a corresponding operation based on the synchronization signal in the second wake-up signal by using the second wake-up signal.

For example, if the network device needs to wake up at least one terminal device, the network device sends a first wake-up signal, where the first wake-up signal includes a first synchronization signal and an identifier of the at least one terminal device, and the first synchronization signal may be used to assist the terminal device in demodulating wake-up information carried in the first wake-up signal. If the network device sends a synchronization signal (that is, a second synchronization signal) and does not wake up the terminal device, the network device sends a second wake-up signal, where the second wake-up signal includes a second synchronization signal and a preset value.

In a second possible implementation, two wake-up signals, that is, the first wake-up signal and the second wake-up signal, are distinguished based on formats of the wake-up signals. For example, the indication information is a format indication.

In an example, a format of the first wake-up signal is a format #1, the first wake-up signal includes the synchronization signal and the identifier of the at least one terminal device, and the first wake-up signal is used to wake up the at least one terminal device; and a format of the second wake-up signal is a format #2, and the second wake-up signal includes the synchronization signal. The format #1 is different from the format #2. Further, optionally, the second wake-up signal may further include other information, for example, a format indication, where the format indication indicates a format of the second wake-up signal. In this way, the terminal device may learn of the format of the second wake-up signal based on the format indication.

For example, if the network device needs to wake up at least one terminal device, the network device sends a first wake-up signal, where a format of the first wake-up signal is a format #1, and the first wake-up signal includes a synchronization signal and an identifier of the at least one terminal device. If the network device sends a synchronization signal and does not wake up the terminal device, the network device sends a second wake-up signal, where a format of the second wake-up signal is a format #2, the second wake-up signal includes a synchronization signal and a format indication, and the format indication indicates a format of the second wake-up signal. It may be understood that the first wake-up signal may alternatively include the format indication.

It may be understood that the foregoing two implementations are examples for descriptions, and this embodiment of this application is not limited thereto. Any manner in which the two wake-up signals can be distinguished is applicable to this embodiment of this application. In an example, two wake-up signals may be distinguished based on lengths of the wake-up signals. For example, a length of the second wake-up signal is a preset length, and the terminal device determines, based on the preset length of the second wake-up signal, that the second wake-up signal does not wake up any terminal device. In another example, the indication information in the second wake-up signal is a specific field. For example, the wake-up signal is distinguished by whether the wake-up signal includes a specific field. For example, if the wake-up signal includes the specific field, it indicates that the wake-up signal does not wake up any terminal device; or if the wake-up signal does not include the specific field, it indicates that the wake-up signal is used to wake up the terminal device. For another example, the wake-up signal is distinguished by using a value of a specific field in the wake-up signal. For example, if the value of the specific field in the wake-up signal is "1", it indicates that the wake-up signal does not wake up any terminal device; or if the value of the specific field in the wake-up signal is "0", it indicates that the wake-up signal is used to wake up the terminal device. In another example, the second wake-up signal includes only a synchronization signal but no other information. For example, if the wake-up signal includes only the synchronization signal, it indicates that the wake-up signal does not wake up any terminal device; or if the wake-up signal includes the synchronization signal and the other information, it indicates that the wake-up signal is used to wake up the terminal device.

The foregoing separately describes solutions in which the synchronization signal is not sent along with the wake-up signal and sent along with the wake-up signal. It may be understood that the foregoing solutions may alternatively be used in combination, that is, the synchronization signal not sent along with the wake-up signal and the synchronization signal sent along with the wake-up signal may be used in combination. A simple example is described below.

In an example, in this embodiment of this application, some synchronization signals are periodically sent, and some synchronization signals are sent along with a wake-up signal. In other words, some of at least two synchronization signals are periodically sent, and some of the at least two synchronization signals are sent along with a wake-up signal. It is assumed that a periodicity of the periodically sent synchronization signal is T. As described above, T is less than T1 or equal to T1.

For differentiation, a periodically sent synchronization signal is denoted as a synchronization signal #1, and a synchronization signal sent along with a wake-up signal is denoted as a synchronization signal #2 (for example, a first synchronization signal). In an example, the synchronization signal #1 may be used by the terminal device to perform link measurement, and the synchronization signal #2 may be used to assist the terminal device in demodulating wake-up information.

Based on this, the network device may periodically send the synchronization signal #1, and send the synchronization signal #2 based on an actual communication status. A periodicity of the synchronization signal #1 is less than T1 or equal to T1. In this way, it can be ensured that the terminal device can perform link measurement based on the synchronization signal #1 within T1.

For example, the network device periodically sends a synchronization signal #1, and if the network device needs to wake up at least one terminal device, the network device sends a wake-up signal (for example, the first wake-up signal in the foregoing solution in which the synchronization signal is sent along with the wake-up signal). The wake-up signal is used to wake up the at least one terminal device, and the wake-up signal includes wake-up information and a synchronization signal #2. In this way, the terminal device can perform timing and synchronization based on the synchronization signal #2, to assist the terminal device in demodulating the wake-up information carried in the wake-up signal.

FIG. 13 is another diagram of sending a synchronization signal.

As shown in FIG. 13, a network device periodically sends the synchronization signal #1. Between the periodic synchronization signal #1, the network device may determine, based on an actual communication status, whether to send a synchronization signal #2. Specifically, when the network device needs to wake up at least one terminal device, the network device sends a wake-up signal, where the wake-up signal includes wake-up information and the synchronization signal #2, that is, the synchronization signal #2 is followed by the wake-up information.

It may be understood that the foregoing solution in which the synchronization signal is not sent along with the wake-up signal and the synchronization signal sent along with the wake-up signal are used together is described as an example, and is not limited herein. For example, for a manner in which the synchronization signal is sent along with a wake-up signal, refer to Manner 1 to Manner 3.

The foregoing mainly describes the related solution of the synchronization signal, and the following describes a related solution of a frequency resource of a synchronization signal. It may be understood that the following solution may be used in combination with the foregoing related solution of the synchronization signal, or may be used independently.

A signal (including a synchronization signal and a wake-up signal) transmitted on a wake-up link and another signal (for example, a signal transmitted on a main link) may be deployed in a frequency division multiplexing (frequency division multiplexing, FDM) manner. For example, assuming that a system bandwidth is F, some frequency resources may be allocated to a wake-up link, and remaining frequency resources may be allocated to another signal in a cell for use. The frequency resources allocated to the wake-up link may be consecutive frequency resources, or may be inconsecutive frequency resources. In an example, the frequency resources allocated to the wake-up link include at least two subbands (subbands). The at least two subbands may be inconsecutive subbands, or may be consecutive subbands. This is not limited. It may be understood that the subband may be replaced with any one of the following: a narrowband (narrowband), a bandwidth part (bandwidth part, BWP), a frequency range, a physical resource block (physical resource block, PRB), a resource block group (resource block group, RBG), or the like. This is not limited.

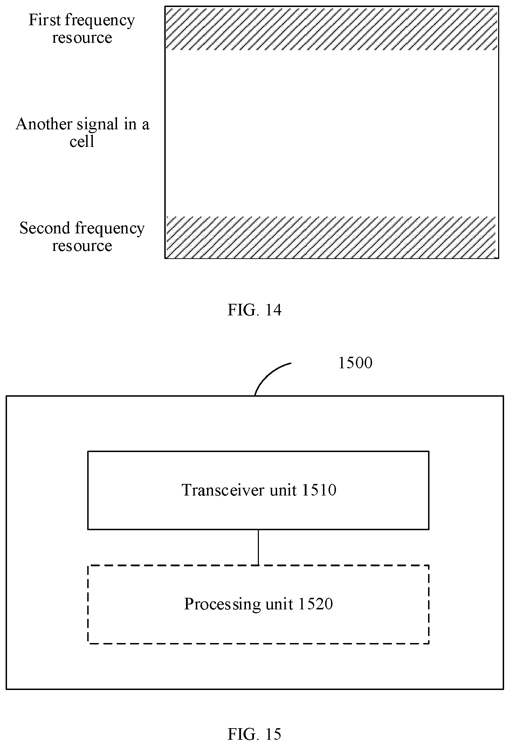

FIG. 14 is a diagram of a frequency resource occupied by a wake-up link.

As shown in FIG. 14, frequency resources allocated to a wake-up link (including a synchronization signal and a wake-up signal that are transmitted on the wake-up link) include a first frequency resource and a second frequency resource. In other words, the network device may send a synchronization signal and a wake-up signal on the first frequency resource and the second frequency resource, and the network device may send another signal on a frequency resource other than the first frequency resource and the second frequency resource. A manner of sending the synchronization signal on the first frequency resource may be the same as or different from a manner of sending the synchronization signal on the second frequency resource. That is, the network device sends a first-type synchronization signal on a first frequency, and the network device sends a second-type synchronization signal on a second frequency. The first-type synchronization signal and the second-type synchronization signal may be sent in a same manner or different manners.

In a possible implementation, the first-type synchronization signal is a periodically sent synchronization signal, and the second-type synchronization signal is flexibly configured. For example, the second-type synchronization signal is a periodically sent synchronization signal or a synchronization signal sent along with a wake-up signal. Based on this manner, the synchronization signal on the first frequency resource may be fixedly configured, that is, periodically sent, and the synchronization signal on the second frequency resource may be flexibly configured. For example, it may be determined, based on an actual communication status, whether the synchronization signal is periodically sent or sent along with the wake-up signal. Because the synchronization signal on the first frequency resource is periodically sent, the terminal device may perform synchronization, link measurement, or the like by using the synchronization signal periodically sent on the first frequency resource. The foregoing is an example for descriptions. In an example, a manner of sending the first-type synchronization signal may be any one of Manner 1 to Manner 3. In an example, a manner of sending the second-type synchronization signal may be any one of Manner 1 to Manner 3.

In an example, the network device may configure, based on an actual communication status, whether the synchronization signal on the second frequency resource is periodically sent or sent along with a wake-up signal. For example, if load on the second frequency resource is light, the network device may configure the synchronization signal on the second frequency resource to be sent along with the wake-up signal; or if load on the second frequency resource is heavy, the network device may configure the synchronization signal on the second frequency resource to be periodically sent.

The load on the second frequency resource may be determined, for example, by using a volume of data transmitted on the second frequency resource. For example, if a quantity of wake-up signals transmitted on the second frequency resource is less than or equal to a first preset value, or a quantity of wake-up signals transmitted on the second frequency resource is within a first preset range, it may be considered that the load on the second frequency resource is light. In other words, the network device may configure the synchronization signal on the second frequency resource to be sent along with the wake-up signal. For another example, if a quantity of wake-up signals transmitted on the second frequency resource is greater than a second preset value, or a quantity of wake-up signals transmitted on the second frequency resource is within a second preset range, it may be considered that the load on the second frequency resource is heavy. In other words, the network device may configure the synchronization signal on the second frequency resource to be periodically sent. The first preset value and the second preset value may be the same or may be different. The quantity of wake-up signals transmitted on the second frequency resource is used as an example for descriptions. This is not limited herein. Any solution that can represent the load on the second frequency resource is applicable to this embodiment of this application. In an example, the quantity of wake-up signals transmitted on the second frequency resource may alternatively be replaced with a volume of data transmitted on the second frequency resource. In other words, the network device may configure, based on the volume of data transmitted on the second frequency resource, whether the synchronization signal on the second frequency resource is sent along with the wake-up signal or periodically sent. In another example, the quantity of wake-up signals transmitted on the second frequency resource may alternatively be replaced with a quantity of terminal devices woken up on the second frequency resource. In other words, the network device may configure, based on the quantity of terminal devices woken up on the second frequency resource, whether the synchronization signal on the second frequency resource is sent along with the wake-up signal or periodically sent.

If the second-type synchronization signal is a synchronization signal sent along with the wake-up signal, the following scenario may occur: If no terminal device is woken up within a period of time, the network device may not send any signal on the second frequency resource within the period of time. In this way, the terminal device that monitors the wake-up signal on the second frequency resource may not perform link measurement, to determine whether quality of a wake-up link is good enough and whether to switch to a main link. Therefore, this embodiment of this application provides two manners to resolve the foregoing problem.

In a possible implementation, the terminal device receives, within a measurement gap (gap) by using the first frequency resource, a periodic synchronization signal sent on the first frequency resource, and performs link measurement based on the periodic synchronization signal. The measurement gap may be periodic. The measurement gap may be preconfigured, for example, preconfigured by the network device and notified to the terminal device, or the measurement gap may be predefined in a standard. This is not limited.

In another possible implementation, if the terminal device does not receive the synchronization signal on the second frequency resource within first preset duration, the terminal device receives the synchronization signal on the first frequency resource. Further, in an example, if the terminal device receives the synchronization signal on the first frequency resource within second preset duration, the terminal device returns to monitor, on the second frequency resource, a signal (including the synchronization signal and the wake-up signal) on a wake-up link; or if the terminal device still does not receive the synchronization signal on the first frequency resource within second preset duration, the terminal device switches to a main link.

It may be understood that the foregoing two implementations are examples for descriptions, and this embodiment of this application is not limited thereto. For example, if the synchronization signal is sent in Manner 1 to Manner 3, because the time interval between adjacent synchronization signals is less than T1 or equal to T1, even if no terminal device is woken up, the network device sends the synchronization signal at least every T1 intervals. Therefore, the terminal device may perform link measurement based on the synchronization signal. For another example, if the synchronization signal is sent in a manner in which the synchronization signal is sent along with the wake-up signal provided in this application, even if no terminal device is woken up, the network device may alternatively send the second wake-up signal, so that the terminal device can perform link measurement based on the synchronization signal.

It may be further understood that the foregoing uses an example in which the synchronization signal on the frequency resource (for example, the second frequency resource) may be configured to be periodically sent or sent along with the wake-up signal for descriptions. This is not limited herein. For example, the synchronization signal on the second frequency resource may be further configured in any one of the following: periodic sending, associated sending, Manner 1 in the embodiment shown in FIG. 7, Manner 2 in the embodiment shown in FIG. 7, and Manner 3 in the embodiment shown in FIG. 7. For another example, the synchronization signal on the second frequency resource may be further configured in any one of the following: Manner 1 in the embodiment shown in FIG. 7, Manner 2 in the embodiment shown in FIG. 7, and Manner 3 in the embodiment shown in FIG. 7. Further, optionally, the network device may configure, based on an actual communication status, a specific manner of sending the synchronization signal on the second frequency resource. For example, the network device may configure, based on a quantity of wake-up signals transmitted on the second frequency resource, a manner of sending the synchronization signal on the second frequency resource. For another example, the network device may configure, based on a volume of data transmitted on the second frequency resource, a manner of sending the synchronization signal on the second frequency resource. For another example, the network device may configure, based on a quantity of terminal devices woken up on the second frequency resource, a manner of sending the synchronization signal on the second frequency resource.

It may be further understood that, in some of the foregoing embodiments, "transmission" is mentioned. Unless otherwise specified, transmission includes receiving and/or sending. For example, transmitting a signal may include receiving a signal and/or sending a signal.

It may be further understood that in embodiments of this application, "monitoring" may alternatively be replaced with "detecting" or "reading". For example, "monitoring a wake-up signal" may alternatively be replaced with "detecting a wake-up signal" or "reading a wake-up signal".

It may be further understood that, in embodiments of this application, if the terminal device learns that the terminal device is woken up, for example, learns, based on the wake-up signal, that the terminal device is woken up, a specific operation of the terminal device is not limited. For example, the terminal device may immediately access the network device, or the terminal device may access the network device at intervals of a period of time. For another example, the terminal device may receive information or data from the network device. This is not limited.

It may be further understood that in some of the foregoing embodiments, an example in which the network device sends the synchronization signal is mainly used for descriptions. It may be understood that after the network device sends the synchronization signal in the manner of sending the synchronization signal, correspondingly, the terminal device may also receive the synchronization signal. For example, the network device sends the synchronization signal on a candidate occasion, and correspondingly, the terminal device may monitor the synchronization signal on the candidate occasion. For another example, the network device periodically sends the synchronization signal, and correspondingly, the terminal device may periodically receive the synchronization signal.

It may be further understood that in some of the foregoing embodiments, the main link and the wake-up link are mainly used as examples for descriptions. This application is not limited thereto. For example, "the wake-up link" may be replaced with "a first module", or may be replaced with "a wake-up circuit", or may be replaced with "in a first state", or may be replaced with "in a first mode". For example, "the terminal device receives a signal on the wake-up link" may be replaced with "the terminal device receives a signal by using the first module (or the wake-up circuit)". The "main link" may alternatively be replaced with "a second module", or may be replaced with "a main circuit", or may be replaced with "in a second state", or may be replaced with "in a second mode". For example, "the terminal device receives a signal on the main link" may be replaced with "the terminal device receives a signal by using the second module (or the main circuit)".

It may be further understood that, in embodiments of this application, interaction between the terminal device and the network device is mainly used as an example for descriptions. This application is not limited thereto. The terminal device may be replaced with a receive-end device, and the receive-end device may be a terminal device or a network device. The network device may be replaced with a transmit-end device, and the transmit-end device may be a terminal device or a network device. For example, the "terminal device" may be replaced with a "first terminal device", and the "network device" may be replaced with a "second terminal device".

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that in the foregoing method embodiments, the method and the operation implemented by the terminal device may be implemented by a component (for example, a chip or a circuit) of the terminal device. In addition, the method and the operation implemented by the network device may be implemented by a component (for example, a chip or a circuit) of the network device. This is not limited.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

FIG. 15 is a block diagram of a communication apparatus 1500 according to an embodiment of this application. The apparatus 1500 includes a transceiver unit 1510. The transceiver unit 1510 may be configured to implement a corresponding communication function. The transceiver unit 1510 may alternatively be referred to as a communication interface or a communication unit. Optionally, the apparatus further includes a processing unit 1520, and the processing unit 1520 may be configured to process data or information.

Optionally, the apparatus 1500 further includes a storage unit. The storage unit may be configured to store instructions and/or data. The processing unit 1520 may read the instructions and/or the data in the storage unit, so that the apparatus is enabled to execute the actions of the terminal device in the foregoing method embodiments.

In a possible design, the apparatus 1500 may be configured to perform an action performed by the network device in the foregoing method embodiments. In this case, the apparatus 1500 may be the network device or a component of the network device. The transceiver unit 1510 is configured to perform a receiving and sending-related operation on the network device side in the foregoing method embodiments. The processing unit 1520 is configured to perform a processing-related operation on the network device side in the foregoing method embodiments.

In a first possible implementation, the transceiver unit 1510 is configured to send at least two synchronization signals, where a time interval between every two adjacent synchronization signals in the at least two synchronization signals is less than or equal to a first value, and the transceiver unit 1510 is configured to send a wake-up signal after sending a first synchronization signal, where the wake-up signal is used to wake up at least one terminal device, a time interval between the first synchronization signal and the wake-up signal is less than or equal to a second value, the at least two synchronization signals include the first synchronization signal, and the first value is greater than the second value.

Optionally, the transceiver unit 1510 is specifically configured to send at least two synchronization signals on some or all of N candidate occasions, where N is an integer greater than 1.

Optionally, all or some of the at least two synchronization signals are periodically sent, and a periodicity T is less than or equal to the first value.

Optionally, the time interval between every two adjacent synchronization signals in the at least two synchronization signals is greater than or equal to the second value.

Optionally, the transceiver unit 1510 is specifically configured to send the wake-up signal and skip sending the synchronization signal in a first time period after sending the first synchronization signal, where a time length of the first time period is less than or equal to the second value.

Optionally, the time interval between every two adjacent synchronization signals in the at least two synchronization signals is greater than the time interval between the first synchronization signal and the wake-up signal.

Optionally, the transceiver unit 1510 is specifically configured to send a first-type synchronization signal in the at least two synchronization signals on a first frequency resource, and the network device sends a second-type synchronization signal in the at least two synchronization signals on a second frequency resource.

Optionally, the first-type synchronization signal is a periodically sent synchronization signal, and the second-type synchronization signal meets any one of the following: the wake-up signal includes the second-type synchronization signal, or the second-type synchronization signal is a periodically sent synchronization signal.

In a second possible implementation, the transceiver unit 1510 is configured to send at least two synchronization signals on some or all of N candidate occasions, where N is an integer greater than 1.

Optionally, all or some of the at least two synchronization signals are periodically sent.

Optionally, the transceiver unit 1510 is further configured to send a wake-up signal and skip sending a synchronization signal in a first time period after sending a first synchronization signal, where the wake-up signal is used to wake up at least one terminal device, and the at least two synchronization signals include the first synchronization signal.

In a third possible implementation, the transceiver unit 1510 is configured to send at least two wake-up signals, where the at least two wake-up signals include a first wake-up signal and a second wake-up signal, the first wake-up signal includes a first synchronization signal and an identifier of at least one terminal device, the first wake-up signal is used to wake up the at least one terminal device, the second wake-up signal includes a second synchronization signal and indication information, and the indication information represents that the second wake-up signal does not wake up any terminal device.

Optionally, a time interval between every two adjacent wake-up signals in the at least two wake-up signals is less than or equal to a first value.

Optionally, the indication information is a preset value.

The apparatus 1500 may implement the steps or procedures performed by the terminal device in the method embodiments according to embodiments of this application. The apparatus 1500 may include units configured to perform the methods performed by the terminal device in the method embodiments according to embodiments of this application. A specific process in which the units perform the foregoing corresponding steps is described in detail in the foregoing method embodiments. For brevity, details are not described herein again.

In another possible design, the apparatus 1500 may be configured to perform an action performed by the terminal device in the foregoing method embodiments. In this case, the apparatus 1500 may be the terminal device or a component of the terminal device. The transceiver unit 1510 is configured to perform a receiving and sending-related operation on the terminal device side in the foregoing method embodiments. The processing unit 1520 is configured to perform a processing-related operation on the terminal device side in the foregoing method embodiments.

In a first possible implementation, the transceiver unit 1510 is configured to receive at least two synchronization signals from a network device, where a time interval between every two adjacent synchronization signals in the at least two synchronization signals is less than or equal to a first value, and the processing unit 1520 is configured to monitor a wake-up signal after the transceiver unit 1510 receives a first synchronization signal, where the wake-up signal is used to wake up at least one terminal device, a time interval between the first synchronization signal and the wake-up signal is less than or equal to a second value, the at least two synchronization signals include the first synchronization signal, and the first value is greater than the second value.

Optionally, the transceiver unit 1510 is specifically configured to receive, from the network device, the at least two synchronization signals on some or all of N candidate occasions, where N is an integer greater than 1.

Optionally, all or some of the at least two synchronization signals are periodically sent, and a periodicity T is less than or equal to the first value.

Optionally, the time interval between every two adjacent synchronization signals in the at least two synchronization signals is greater than or equal to the second value.

Optionally, the processing unit 1520 is specifically configured to monitor the wake-up signal and skip monitoring a synchronization signal in a first time period after the transceiver unit 1510 receives the first synchronization signal, where a time length of the first time period is less than or equal to the second value.

Optionally, the processing unit 1520 is further configured to: monitor a second synchronization signal after the first time period, and skip monitoring the wake-up signal before detecting the second synchronization signal.

Optionally, the time interval between every two adjacent synchronization signals in the at least two synchronization signals is greater than the time interval between the first synchronization signal and the wake-up signal.

Optionally, the transceiver unit 1510 is specifically configured to: receive, from the network device, a first-type synchronization signal in the at least two synchronization signals on a first frequency resource, and receive, from the network device, a second-type synchronization signal in the at least two synchronization signals on a second frequency resource.

Optionally, the first-type synchronization signal is a periodically sent synchronization signal, and the second-type synchronization signal meets any one of the following: the wake-up signal includes the second-type synchronization signal, or the second-type synchronization signal is a periodically sent synchronization signal.

Optionally, the wake-up signal includes the second-type synchronization signal, and the transceiver unit 1510 is further configured to: if the second-type synchronization signal is not received on the second frequency resource within preset duration, receive the second-type synchronization signal on the first frequency resource, or the processing unit 1520 is further configured to perform, within a preset measurement gap, measurement by using the first-type synchronization signal received on the first frequency resource.

In a second possible implementation, the transceiver unit 1510 is configured to receive, from a network device, at least two synchronization signals on some or all of N candidate occasions, where N is an integer greater than 1.

Optionally, all or some of the at least two synchronization signals are periodically sent.

Optionally, the processing unit 1520 is configured to monitor a wake-up signal and skip monitoring a synchronization signal in a first time period after the transceiver unit 1510 receives a first synchronization signal, where the wake-up signal is used to wake up at least one terminal device, and the at least two synchronization signals include the first synchronization signal.

Optionally, the processing unit 1520 is configured to: monitor a second synchronization signal after the first time period, and skip monitoring the wake-up signal before detecting the second synchronization signal.

In a third possible implementation, the transceiver unit 1510 is configured to receive at least two wake-up signals from a network device, where the at least two wake-up signals include a first wake-up signal and a second wake-up signal, the first wake-up signal includes a first synchronization signal and an identifier of at least one terminal device, the first wake-up signal is used to wake up the at least one terminal device, the second wake-up signal includes a second synchronization signal and indication information, and the indication information represents that the second wake-up signal does not wake up any terminal device.

Optionally, a time interval between every two adjacent wake-up signals in the at least two wake-up signals is less than or equal to a first value.

Optionally, the indication information is a preset value.

The apparatus 1500 may implement the steps or procedures performed by the network device in the method embodiments according to embodiments of this application. The apparatus 1500 may include units configured to perform the methods performed by the network device in the method embodiments according to embodiments of this application. A specific process in which the units perform the foregoing corresponding steps is described in detail in the foregoing method embodiments. For brevity, details are not described herein again.

It should be understood that the apparatus 1500 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute at least one software or firmware program and a memory, a combined logic circuit, and/or another suitable component that supports the described functions. In an optional example, a person skilled in the art may understand that the apparatus 1500 may be specifically the terminal device in the foregoing embodiments, and may be configured to perform the procedures and/or the steps corresponding to the terminal device in the foregoing method embodiments, or the apparatus 1500 may be specifically the network device in the foregoing embodiments, and may be configured to perform the procedures and/or the steps corresponding to the network device in the foregoing method embodiments. To avoid repetition, details are not described herein again.

The apparatus 1500 in the foregoing solutions has functions of implementing corresponding steps performed by the terminal device in the foregoing methods. The function may be implemented by hardware, or may be implemented by hardware executing corresponding software. The hardware or the software includes at least one module corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit such as the processing unit may be replaced with a processor, respectively performing receiving and sending operations and a related processing operation in each method embodiment.

In addition, the transceiver unit 1510 may alternatively be a transceiver circuit (for example, may include a receiving circuit and a sending circuit), and the processing unit may be a processing circuit.

It should be noted that the apparatus in FIG. 15 may be the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

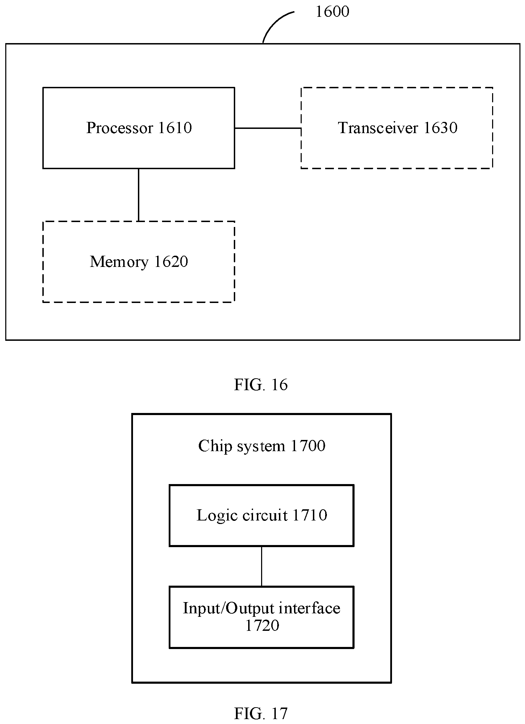

FIG. 16 shows another communication apparatus 1600 according to an embodiment of this application. The apparatus 1600 includes a processor 1610, and the processor 1610 is coupled to a memory 1620. Optionally, the apparatus 1600 further includes the memory 1620. The memory 1620 is configured to store a computer program or instructions and/or data. The processor 1610 is configured to execute the computer program or the instructions stored in the memory 1620, or read the data stored in the memory 1620, to perform the methods in the foregoing method embodiments.

Optionally, there is at least one processor 1610.

Optionally, there is at least one memory 1620.

Optionally, the memory 1620 may be integrated with the processor 1610, or the memory 1620 and the processor 1610 are separately disposed.

Optionally, as shown in FIG. 16, the apparatus 1600 may further include a transceiver 1630, and the transceiver 1630 is configured to receive and/or send a signal. For example, the processor 1610 is configured to control the transceiver 1630 to receive and/or send the signal.

In a solution, the apparatus 1600 is configured to implement operations performed by the terminal device in the foregoing method embodiments.

For example, the processor 1610 is configured to execute the computer program or the instructions stored in the memory 1620, to implement related operations of the terminal device in the foregoing method embodiments, for example, the method performed by the terminal device in the embodiment shown in FIG. 7.

In another solution, the apparatus 1600 is configured to implement operations performed by the network device in the foregoing method embodiments.

For example, the processor 1610 is configured to execute the computer program or the instructions stored in the memory 1620, to implement related operations of the network device in the foregoing method embodiments, for example, the method performed by the network device in the embodiment shown in FIG. 7.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of example but not limitation, the RAM includes the following forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described in this specification is intended to include, but is not limited to, these and any other appropriate type of memory.

FIG. 17 shows a chip system 1700 according to an embodiment of this application. The chip system 1700 (or may alternatively be referred to as a processing system) includes a logic circuit 1710 and an input/output interface (input/output interface) 1720.

The logic circuit 1710 may be a processing circuit in the chip system 1700. The logic circuit 1710 may be coupled to and connected to a storage unit, and invoke instructions in the storage unit, to enable the chip system 1700 to implement the methods and functions in embodiments of this application. The input/output interface 1720 may be an input/output circuit in the chip system 1700, and outputs information processed by the chip system 1700, or inputs to-be-processed data or signaling information into the chip system 1700 for processing.

Specifically, for example, if the chip system 1700 is installed in a terminal device, the logic circuit 1710 is coupled to the input/output interface 1720, and the input/output interface 1720 may input a wake-up signal to the logic circuit 1710 for processing.

In a solution, the chip system 1700 is configured to implement operations performed by the terminal device in the foregoing method embodiments.

For example, the logic circuit 1710 is configured to implement a processing-related operation performed by the terminal device in the foregoing method embodiments, for example, a processing-related operation performed by the terminal device in the embodiment shown in FIG. 7. The input/output interface 1720 is configured to implement an operation related to sending and/or receiving performed by the terminal device in the foregoing method embodiments, for example, the operation related to sending and/or receiving performed by the terminal device in the embodiment shown in FIG. 7.

In another solution, the chip system 1700 is configured to implement operations performed by the network device in the foregoing method embodiments.

For example, the logic circuit 1710 is configured to implement a processing-related operation performed by the network device in the foregoing method embodiments, for example, a processing-related operation performed by the network device in the embodiment shown in FIG. 7. The input/output interface 1720 is configured to implement an operation related to sending and/or receiving performed by the network device in the foregoing method embodiments, for example, the operation related to sending and/or receiving performed by the network device in the embodiment shown in FIG. 7.

An embodiment of this application further provides a computer-readable storage medium. The computer-readable storage medium stores computer instructions for implementing the method performed by the terminal device in the foregoing method embodiments.

For example, when the computer program is executed by a computer, the computer is enabled to implement the method performed by the terminal device in the foregoing method embodiments.

For another example, when the computer program is executed by a computer, the computer is enabled to implement the method performed by the network device in the foregoing method embodiments.

An embodiment of this application further provides a computer program product, including instructions. When the instructions are executed by a computer, the method performed by the terminal device or the network device in the foregoing method embodiments is implemented.

An embodiment of this application further provides a communication system. The communication system includes the terminal device and the network device in the foregoing embodiments.

For explanations and beneficial effects of related content of any one of the apparatuses provided above, refer to the corresponding method embodiments provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, at least two units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or some of embodiments may be implemented in a form of a computer program product. The computer program product includes at least one computer instruction. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instruction may be stored in a computer-readable storage medium or may be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, for example, a server or a data center, integrating at least one usable medium. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but is not limited to any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A signal transmission method, comprising:
sending, by a network device, at least two synchronization signals, wherein a time interval between every two adjacent synchronization signals in the at least two synchronization signals is less than or equal to a first value, and the at least two synchronization signals comprise a first synchronization signal; and
sending, by the network device, a wake-up signal after sending the first synchronization signal, wherein the wake-up signal is used to wake up at least one terminal device, a time interval between the first synchronization signal and the wake-up signal is less than or equal to a second value, and the first value is greater than the second value.

2. The method according to claim 1, wherein the sending, by a network device, at least two synchronization signals comprises:
sending, by the network device, the at least two synchronization signals on some or all of N candidate occasions, wherein N is an integer greater than 1.

3. The method according to claim 1 or 2, wherein all or some of the at least two synchronization signals are periodically sent, and a periodicity T is less than or equal to the first value.

4. The method according to any one of claims 1 to 3, wherein the time interval between every two adjacent synchronization signals in the at least two synchronization signals is greater than or equal to the second value.

5. The method according to any one of claims 1 to 4, wherein the sending, by the network device, a wake-up signal after sending the first synchronization signal comprises:
sending, by the network device, the wake-up signal and skipping sending a synchronization signal in a first time period after sending the first synchronization signal, wherein a time length of the first time period is less than or equal to the second value.

6. The method according to any one of claims 1 to 5, wherein the time interval between every two adjacent synchronization signals in the at least two synchronization signals is greater than the time interval between the first synchronization signal and the wake-up signal.

7. The method according to any one of claims 1 to 6, wherein the sending, by a network device, at least two synchronization signals comprises:
sending, by the network device, a first-type synchronization signal in the at least two synchronization signals on a first frequency resource, and sending, by the network device, a second-type synchronization signal in the at least two synchronization signals on a second frequency resource.

8. The method according to claim 7, wherein the first-type synchronization signal is a periodically sent synchronization signal, and the second-type synchronization signal meets any one of the following:
the wake-up signal comprises the second-type synchronization signal, or the second-type synchronization signal is a periodically sent synchronization signal.

9. A signal transmission method, comprising:
receiving, by a terminal device, at least two synchronization signals from a network device, wherein a time interval between every two adjacent synchronization signals in the at least two synchronization signals is less than or equal to a first value, and the at least two synchronization signals comprise a first synchronization signal; and
monitoring, by the terminal device, a wake-up signal after receiving the first synchronization signal from the network device, wherein the wake-up signal is used to wake up at least one terminal device, a time interval between the first synchronization signal and the wake-up signal is less than or equal to a second value, and the first value is greater than the second value.

10. The method according to claim 9, wherein the receiving, by a terminal device, at least two synchronization signals from a network device comprises:
receiving, by the terminal device from the network device, the at least two synchronization signals on some or all of N candidate occasions, wherein N is an integer greater than 1.

11. The method according to claim 9 or 10, wherein all or some of the at least two synchronization signals are periodically sent, and a periodicity T is less than or equal to the first value.

12. The method according to any one of claims 9 to 11, wherein the time interval between every two adjacent synchronization signals in the at least two synchronization signals is greater than or equal to the second value.

13. The method according to any one of claims 9 to 12, wherein the monitoring, by the terminal device, a wake-up signal after receiving the first synchronization signal from the network device comprises:
monitoring, by the terminal device, the wake-up signal and skipping monitoring a synchronization signal in a first time period after receiving the first synchronization signal, wherein a time length of the first time period is less than or equal to the second value.

14. The method according to claim 13, wherein the method further comprises:
monitoring, by the terminal device, a second synchronization signal after the first time period, and skipping monitoring the wake-up signal before the terminal device detects the second synchronization signal.

15. The method according to any one of claims 9 to 14, wherein the time interval between every two adjacent synchronization signals in the at least two synchronization signals is greater than the time interval between the first synchronization signal and the wake-up signal.

16. The method according to any one of claims 9 to 15, wherein the receiving, by a terminal device, at least two synchronization signals from a network device comprises:
receiving, by the terminal device from the network device, a first-type synchronization signal in the at least two synchronization signals on a first frequency resource, and receiving, by the terminal device from the network device, a second-type synchronization signal in the at least two synchronization signals on a second frequency resource.

17. The method according to claim 16, wherein the first-type synchronization signal is a periodically sent synchronization signal, and the second-type synchronization signal meets any one of the following:
the wake-up signal comprises the second-type synchronization signal, or the second-type synchronization signal is a periodically sent synchronization signal.

18. The method according to claim 17, wherein the wake-up signal comprises the second-type synchronization signal, and the method further comprises:
if the terminal device does not receive the second-type synchronization signal on the second frequency resource within preset duration, receiving, by the terminal device, the second-type synchronization signal on the first frequency resource; or
performing, by the terminal device within a preset measurement gap, measurement by using the first-type synchronization signal received on the first frequency resource.

19. A signal transmission method, comprising:
sending, by a network device, at least two synchronization signals on some or all of N candidate occasions, wherein N is an integer greater than 1.

20. The method according to claim 19, wherein all or some of the at least two synchronization signals are periodically sent.

21. The method according to claim 19 or 20, wherein the method further comprises:
sending, by the network device, a wake-up signal and skipping sending a synchronization signal in a first time period after sending a first synchronization signal, wherein the wake-up signal is used to wake up at least one terminal device, and the at least two synchronization signals comprise the first synchronization signal.

22. A signal transmission method, comprising:
receiving, by a terminal device from a network device, at least two synchronization signals on some or all of N candidate occasions, wherein N is an integer greater than 1.

23. The method according to claim 22, wherein all or some of the at least two synchronization signals are periodically sent.

24. The method according to claim 22 or 23, wherein the method further comprises:
monitoring, by the terminal device, a wake-up signal and skipping monitoring a synchronization signal in a first time period after receiving a first synchronization signal from the network device, wherein the wake-up signal is used to wake up at least one terminal device, and the at least two synchronization signals comprise the first synchronization signal.

25. The method according to claim 24, wherein the method further comprises:
monitoring, by the terminal device, a second synchronization signal after the first time period, and skipping monitoring the wake-up signal before the terminal device detects the second synchronization signal.

26. A signal transmission method, comprising:
receiving, by a terminal device, at least two wake-up signals from a network device, wherein the at least two wake-up signals comprise a first wake-up signal and a second wake-up signal, wherein
the first wake-up signal comprises a first synchronization signal and an identifier of at least one terminal device, the first wake-up signal is used to wake up the at least one terminal device, the second wake-up signal comprises a second synchronization signal and indication information, and the indication information represents that the second wake-up signal does not wake up any terminal device.

27. The method according to claim 26, wherein a time interval between every two adjacent wake-up signals in the at least two wake-up signals is less than or equal to a first value.

28. The method according to claim 26 or 27, wherein the indication information is a preset value.

29. A signal transmission method, comprising:
sending, by a network device, at least two wake-up signals, wherein the at least two wake-up signals comprise a first wake-up signal and a second wake-up signal, wherein
the first wake-up signal comprises a first synchronization signal and an identifier of at least one terminal device, the first wake-up signal is used to wake up the at least one terminal device, the second wake-up signal comprises a second synchronization signal and indication information, and the indication information represents that the second wake-up signal does not wake up any terminal device.

30. The method according to claim 29, wherein a time interval between every two adjacent wake-up signals in the at least two wake-up signals is less than or equal to a first value.

31. The method according to claim 29 or 30, wherein the indication information is a preset value.

32. A communication apparatus, comprising:
a processor, configured to execute a computer program stored in a memory, so that the apparatus is enabled to perform the method according to any one of claims 1 to 31.

33. The apparatus according to claim 32, wherein the apparatus further comprises the memory and/or a communication interface, and the communication interface is coupled to the processor; and
the communication interface is configured to input and/or output information.

34. A computer-readable storage medium, wherein the computer-readable storage medium stores a computer program, and when the computer program is run on a computer, the computer is enabled to perform the method according to any one of claims 1 to 31.

35. A computer program product, wherein the computer program product comprises instructions for performing the method according to any one of claims 1 to 31.
